(19) **Europäisches Patentamt / European Patent Office / Office européen des brevets**

(11) **EP 4 756 299 A1**

(12) # EUROPEAN PATENT APPLICATION

(43) Date of publication:
**10.06.2026 Bulletin 2026/24**

(21) Application number: **25219631.6**

(22) Date of filing: **01.12.2025**

(51) International Patent Classification (IPC):
**F24D 19/10** (2006.01)    **F24D 3/18** (2006.01)
**F24D 17/02** (2006.01)    **F24F 5/00** (2006.01)
**F24H 15/136** (2022.01)

(52) Cooperative Patent Classification (CPC):
**F24D 17/02; F24D 3/18; F24D 19/1069;
F24D 19/1072; F24D 19/1081; F24H 4/04;
F24H 9/2007; F24H 15/136; F24H 15/152;
F24H 15/156; F24H 15/164; F24H 15/168;
F24H 15/223; F24H 15/254; F24H 15/258;**  (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **03.12.2024   KR 20240177862**

(71) Applicant: **LG Electronics Inc.
Yeongdeungpo-gu
Seoul 07336 (KR)**

(72) Inventors:
• **KIM, Jaehong
Seoul (KR)**

• **MIN, Seungjae
Seoul (KR)**
• **KIM, Hongkyu
Seoul (KR)**
• **LEE, Jihack
Seoul (KR)**
• **CHUNG, Woocheol
Seoul (KR)**
• **JEON, Hyejeong
Seoul (KR)**

(74) Representative: **Schott, Jakob Valentin
Wuesthoff & Wuesthoff
Patentanwälte und Rechtsanwalt PartG mbB
Schweigerstraße 2
81541 München (DE)**

(54) **HEAT PUMP, OPERATION METHOD OF HEAT PUMP, AND SERVER**

(57)    The present disclosure relates to a heat pump, an operation method of the heat pump, and a server. The heat pump according to an embodiment of the present disclosure may include: a compressor configured to compress a refrigerant; at least one heat exchanger in which heat exchange occurs between water and the refrigerant; a memory configured to store operation data related to an operation of the heat pump; and a controller, and the controller may calculate, based on the operation data, an estimated amount of power expected to be used by the heat pump in a predetermined operation for bringing a temperature of water stored in a hot water supply tank for storing the heat-exchanged water to correspond to a preset target temperature, and determine a schedule for controlling a load of the heat pump during an operating time in which the heat pump performs the predetermined operation, based on the estimated amount of power.

EP 4 756 299 A1

(52) Cooperative Patent Classification (CPC): (Cont.)
**F24H 15/269; F24H 15/335; F24H 15/375;**
**F24H 15/38; F24H 15/39; F24H 15/395;**
**F24H 15/429; F24H 15/486; F25B 47/025;**
**G05B 13/027; G05B 17/02; G06Q 50/06;**
F24F 5/0096; F24H 2240/01; F24H 2240/09;
F25B 5/04; F25B 13/00; F25B 2313/02741;
F25B 2339/047; F25B 2400/0403

**Description**

This application claims the benefit of and priority to Korean Patent Application No. 10-2024-0177862, filed on December 3, 2024, the entire disclosure(s) of which is hereby incorporated herein by reference in its entirety

**BACKGROUND**

**Field of** the **Invention**

The present disclosure relates to a heat pump, an operation method of the heat pump, and a server, and more particularly, to a heat pump, an operation method of the heat pump, and a server capable of setting an operation schedule using a learning model.

Discussion **of** the **Related Art**

Heat pumps refer to devices that transmit the thermal energy from a low-temperature heat source to a high-temperature space or transmit the thermal energy from a high-temperature heat source to a low-temperature space by using the evaporation heat or condensation heat of a refrigerant. In General, the heat pump includes an outdoor unit including a compressor and an outdoor heat exchanger, and an indoor unit including an indoor heat exchanger.

In recent years, as an impact of a climate change such as global warming increases, a research is being conducted to reduce greenhouse gas emissions. Among these technologies, heat pumps that heat water using heat exchange between water and refrigerant are gaining an attention as a technology that replaces the use of fossil fuels for heating to increase indoor temperature or for hot water supply to provide hot water to users.

Meanwhile, electronic devices used in homes for user convenience are becoming increasingly diverse, and various automation systems are being constructed across different industrial sectors to enhance productivity. However, as technology advances, power consumption is trending upward not only in homes but throughout industry as a whole, and a cost burden associated with increased power usage is also growing. To address these issues, a research is being actively conducted on systems that operate according to user requirements while reducing power consumption costs.

**SUMMARY**

In view of the above, an object of the present disclosure is to solve the above-described problems and other problems.

Another object of the present disclosure is to provide a heat pump, an operation method of the heat pump, and a server capable of predicting a full-load interval with large power consumption.

Yet another object of the present disclosure is to provide a heat pump, an operation method of the heat pump, and a server capable of determining an operation schedule that minimizes power consumption while satisfying a user requirement corresponding to the full-load interval.

Still yet another object of the present disclosure is to provide a heat pump, an operation method of the heat pump, and a server capable of determining the operation schedule in consideration of a time-of-use (ToU) rate for power consumption.

Still yet another object of the present disclosure is to provide a heat pump, an operation method of the heat pump, and a server capable of determining the operation schedule in consideration of a degree at which power is stored in an Energy Storage System (ESS) and/or a degree at which the stored power is used.

Still yet another object of the present disclosure is to provide a heat pump, an operation method of the heat pump, and a server capable of determining the operation schedule in consideration of user data delivered from an external device.

In order to achieve the object, a heat pump according to an embodiment of the present disclosure may include: a compressor configured to compress a refrigerant; at least one heat exchanger in which heat exchange occurs between water and the refrigerant; a memory configured to store operation data related to an operation of the heat pump; and a controller, and the controller may calculate, based on the operation data, an estimated amount of power expected to be used by the heat pump in a predetermined operation for bringing a temperature of water stored in a hot water supply tank for storing the heat-exchanged water to correspond to a preset target temperature, and determine a schedule for controlling a load of the heat pump during an operating time in which the heat pump performs the predetermined operation, based on the estimated amount of power.

In order to achieve the object, a server according to an embodiment of the present disclosure may include: a communication interface configured to communicate with a heat pump; a memory; and a processor configured to store operation data related to an operation of the heat pump received through the communication interface in the memory, and the processor may calculate, based on the operation data, an estimated amount of power expected to be used by the heat pump in a predetermined operation for bringing a temperature of water stored in a hot water supply tank for storing water which exchanges heat with a refrigerant in the heat pump to correspond to a preset target temperature, and determine a schedule for controlling a load of the heat pump during an operating time in which the heat pump performs the predetermined operation, based on the estimated amount of power.

In order to achieve the object, an operation method of a heat pump according to an embodiment of the present disclosure may include: calculating, based on operation data related to an operation of the heat pump stored in a memory of the heat pump, an estimated amount of power expected to be used by the heat pump in a predetermined operation for bringing a temperature of water stored in a hot water supply tank for storing water which exchanges heat with a refrigerant compressed by a compressor of the heat pump to correspond to a preset target temperature; and an operation of determining a schedule for controlling a load of the heat pump during an operating time in which the heat pump performs the predetermined operation, based on the estimated amount of power.

Details of other embodiments will be included in the detailed description and the accompanying drawings.

According to various embodiments of the present disclosure, it is possible to predict a full-load interval with large power consumption

Further, according to various embodiments of the present disclosure, it is possible to determine an operation schedule that minimizes power consumption while satisfying a user requirement corresponding to the full-load interval.

In addition, according to various embodiments of the present disclosure, it is possible to determine the operation schedule in consideration of a time-of-use (ToU) rate for power consumption.

Further, according to various embodiments of the present disclosure, it is possible to determine the operation schedule in consideration of a degree at which power is stored in an Energy Storage System (ESS) and/or a degree at which the stored power is used.

In addition, according to various embodiments of the present disclosure, it is possible to determine the operation schedule in consideration of user data delivered from an external device.

Further scope of applicability of the present disclosure will become apparent from the detailed description given hereinafter. However, it should be understood that the detailed description and specific examples, while indicating preferred embodiments of the present disclosure, are given by illustration only, since various changes and modifications within the idea and scope of the present disclosure will become apparent to those skilled in the art from this detailed description.

## BRIEF DESCRIPTION OF THE DRAWINGS

Fig. 1 is a diagram illustrating a system according to an embodiment of the present disclosure.
Fig. 2 is a configuration diagram of a heat pump according to an embodiment of the present disclosure.
Fig. 3 is a block diagram of a heat pump according to an embodiment of the present disclosure.
Fig. 4 is a flowchart referenced for describing machine learning according to an embodiment of the present disclosure.
Fig. 5 is a block diagram of a server according to embodiment of the present disclosure.
Fig. 6 is a flowchart illustrating an operation method of a heat pump according to an embodiment of the present disclosure.
Figs. 7 to 12 are diagrams referenced for describing an operation of a heat pump according to an embodiment of the present disclosure.
Figs. 13 to 18 are diagrams referenced for describing an operation of a system according to an embodiment of the present disclosure.

## DETAILED DESCRIPTION

Hereinafter, the present disclosure will be described in detail with reference to the drawings. In the drawings, in order to clearly and concisely describe the present disclosure, parts that are not related to the description are omitted, and the same drawing reference numerals are used for identical or extremely similar parts throughout the specification.

The suffixes "module" and "part" used for components in the following description are given simply for the convenience of writing this specification, and do not in themselves impart any particularly important meaning or role. Therefore, the above "module" and "part" may be used interchangeably.

In the present application, it should be understood that the terms "comprises, includes," "has," etc. specify the presence of features, numbers, steps, operations, elements, components, or combinations thereof described in the specification, but do not preclude the presence or addition of one or more other features, numbers, steps, operations, elements, components, or combinations thereof.

In addition, in this specification, terms such as first, second, etc. may be used to describe various elements, but these elements are not limited by these terms. These terms are used only to distinguish one element from another.

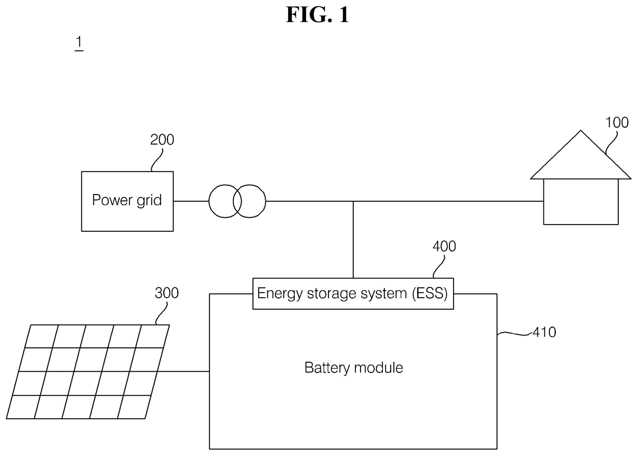

Fig. 1 is a diagram illustrating a system according to an embodiment of the present disclosure.

Referring to Fig. 1, the system 1 may include a heat pump 100, a power grid 200, a power generation module 300, and/or an energy storage system (ESS) 400.

The heat pump 100 may be installed in a building corresponding to a user. The heat pump 50 may receive power from the power grid 200 and/or the energy storage system (ESS) 400.

The power grid 200 may include a power generation facility that produce power, power transmission paths, and the like.

The power generation module 300 may generate electrical energy. For example, when the power generation module 300 utilizes solar power generation, the power generation module 300 may be configured as a solar cell array. The solar cell array may be provided as a combination of a plurality of solar cell modules. The solar cell modules may connect a plurality of solar cells in series or in parallel. In this case, the power generation module 300 may convert solar energy into electrical energy to generate a predetermined voltage and a predetermined current. In the present disclosure, the power generation module 300 utilizing solar power generation is described as an example, but is not limited thereto. For example, the power generation module 300 may include various types of generators such as wind power, tidal power, hydroelectric power, geothermal power, and the like.

The energy storage system (ESS) 400 may store the power from the power grid 200 and/or the power generation module 300. The energy storage system (ESS) 400 may include a battery module 410 that stores power. The battery module 410 may include at least one battery. For example, the battery may include a lithium-ion battery (LiB), a lead-acid battery, a sodium-sulfur battery (NaS), a redox flow battery (RFB), a supercapacitor, and the like. The battery may be composed of a plurality of cells.

The energy storage system (ESS) 400 may include a power conversion device that converts power. The power conversion device may include an inverter and/or a converter. For example, the converter may convert the power output from the power generation module 300 into a direct current corresponding to the energy storage system (ESS) 400. For example, an inverter may convert the power stored in the battery module 410 into an alternating current corresponding to the heat pump 100.

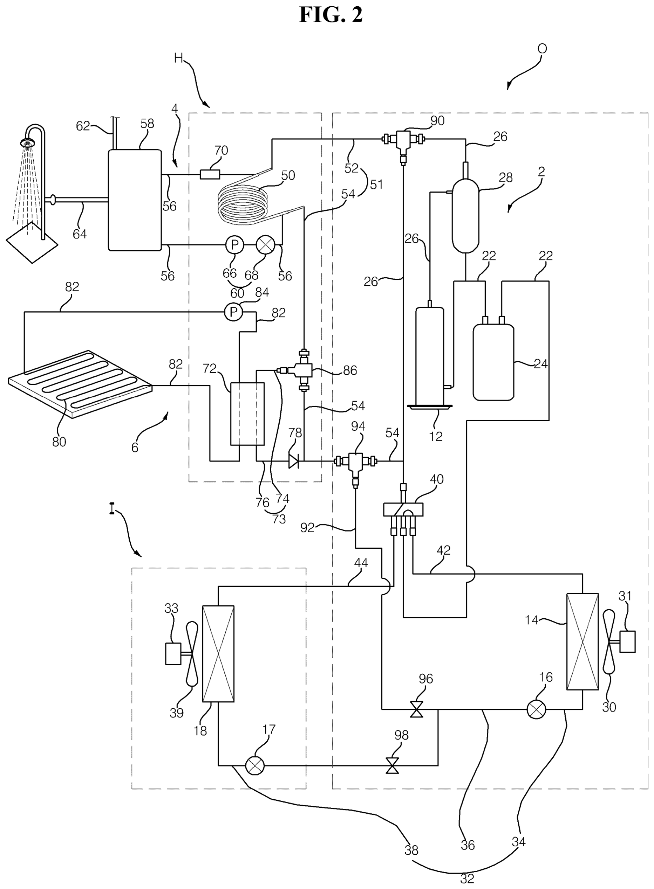

Fig. 2 is a configuration diagram of a heat pump according to an embodiment of the present disclosure.

Referring to Fig. 2, the heat pump 100 may include an outdoor unit O, an indoor unit I, and/or a hot water supply unit H for heat exchange between compressed refrigerant and water. The heat pump 100 may include a refrigeration cycle circuit 2, a hot water supply circuit 4, and/or a floor heating circuit 6.

The outdoor unit O may include a compressor 12 which compresses refrigerant, an accumulator 24 which is disposed in a suction path 34 of the compressor 12 to prevent a liquid refrigerant from entering the compressor 12, an oil separator 28 which is disposed in a discharge path 26 of the compressor 12 to separate oil from the refrigerant and oil discharged from the compressor 12 and collect the oil to the compressor 12, and/or a heating/cooling switching valve 40 which selects a refrigerant path according to a heating/cooling operation.

In addition, the outdoor unit O may further include multiple sensors, valves, and the like. For example, the outdoor unit O may include a heat exchanger temperature sensor which detects a temperature of an outdoor heat exchanger 14, an outdoor temperature sensor which detects an outdoor temperature, a current sensor which detects a current flowing through an outdoor fan motor 31, a pressure sensor which detects a pressure of a refrigerant in each path, and the like.

The outdoor unit O and the indoor unit I may include heat exchangers 14 and 18, fans 30 and 39, and/or expansion mechanisms 16 and 17, respectively. The outdoor unit O and the indoor unit I may perform cooling air conditioning that cools an indoor air or heating air conditioning that heats the indoor air, depending on a flow direction of the refrigerant. For example, the indoor unit I may receive a compressed refrigerant from the outdoor unit O and discharge a cooled or heated air into an interior.

The outdoor heat exchanger 14 may condense or evaporate the refrigerant. The outdoor heat exchanger 14 may be configured as an air-refrigerant heat exchanger in which heat exchange occurs between the outdoor air and the refrigerant, or may be configured as a water-refrigerant heat exchanger in which heat exchange occurs between cooling water and the refrigerant. For example, when the outdoor heat exchanger 14 is configured as the air-refrigerant heat exchanger, the outdoor fan 30 may be disposed on one side of the outdoor heat exchanger 14 and may blow the outdoor air to the outdoor heat exchanger 14 to promote heat dissipation of the refrigerant. The outdoor fan 30 may rotate according to driving of the outdoor fan motor 31. Hereinafter, a case where the outdoor heat exchanger 14 is configured as the air-refrigerant heat exchange in which the outdoor air and the refrigerant exchange heat will be described as an example.

The outdoor heat exchanger 14 may be connected to the indoor heat exchanger 18 through a heat exchanger connection pipe 32. The expansion mechanism 16 and 17 may be installed in the heat exchanger connection pipe 32. The heat exchanger connection pipe 32 may include: an expansion mechanism connection pipe 36 connecting an outdoor expansion device 16 and the indoor expansion mechanism 17; an outdoor heat exchanger-outdoor expansion mechanism connection pipe 34 connecting the outdoor heat exchanger 14 and the outdoor expansion mechanism 16; and an indoor expansion mechanism-indoor heat exchanger connection pipe 38 connecting the indoor heat exchanger 18 and the indoor expansion mechanism 17.

The indoor heat exchanger 18 may heat-exchange the indoor air and the refrigerant. The indoor heat exchanger 18 may be configured as a heat exchanger that cools or heats the interior. An indoor fan 39 may be disposed on one side of the indoor heat exchanger 18. The indoor fan 39 may blow the indoor air to the indoor heat exchanger 18.

In a case of a cooling mode in which the heat pump 100 cools the interior through the indoor unit I, the refrigerant compressed by the compressor 12 of the outdoor unit O sequentially passes through the outdoor heat exchanger 14, the expansion mechanisms 16 and 17, and the indoor heat exchanger 18 and is connected to be collected to the compressor 12, and as a result, the indoor heat exchanger 18 may serve as an evaporator. Meanwhile, in a case of a heating mode in which the heat pump 100 heats the interior through the indoor unit I, the refrigerant compressed by the compressor 12 of the outdoor unit O sequentially passes through the indoor heat exchanger 18, the expansion mechanisms 16 and 17, and the outdoor heat exchanger 13 and is connected to be collected to the compressor 12, and as a result, the indoor heat exchanger 18 may serve as a condenser.

The cooling-heating switching valve 40 may switch the flow direction of the refrigerant so that the refrigerant flows in an order of the compressor 12, the outdoor heat exchanger 14, the expansion mechanisms 16 and 17, and the indoor heat exchanger 18, or in an order of the compressor 12, the indoor heat exchanger 18, the expansion mechanisms 16 and 17, and the outdoor heat exchanger 14. The cooling-heating switching valve 40 may be connected to the compressor 12 through a compressor suction path 22 and a compressor discharge path 26. The cooling-heating switching valve 40 may be connected to the indoor heat exchanger 18 through an indoor heat exchange connection pipe 44. The cooling-heating switching valve 40 may be connected to the outdoor heat exchanger 14 through an outdoor heat exchange connection pipe 32.

The outdoor unit O may include a refrigerant control valve 90 that may selectively supply a refrigerant supplied from the compressor discharge path 26 to either the hot water supply unit H or the cooling-heating switching valve 40. In this case, when the refrigerant control valve 90 is configured as a three-way valve, the refrigerant control valve 90 may be provided on the compressor discharge path 26. The refrigerant control valve 90 may have a hot water supply inlet path 52 branched therefrom for supplying the refrigerant to the hot water supply unit H.

The outdoor unit O may further include an auxiliary refrigerant control valve 94. The auxiliary refrigerant control valve 94 may operate so that refrigerant delivered from the hot water supply unit H to the outdoor unit O is supplied to the heat exchanger bypass path 92, or the refrigerant is supplied to the cooling-heating switching valve 40. The refrigerant control valve 90 may be configured as the three-way valve.

The outdoor unit O may further include a heat exchanger bypass valve 96 installed in the heat exchanger bypass path 92 to control a flow of the refrigerant, and a liquid refrigerant valve 98 installed between the heat exchanger bypass path 92 and the indoor expansion mechanism 17 to control the flow of the refrigerant.

The heat exchanger bypass valve 96 may be turned on when the heat pump 100 provides a heating function. The heat exchanger bypass valve 96 may be turned off when the heat pump 100 performs an air conditioning function, or a simultaneous operation of the air conditioning function and the heating function.

The liquid refrigerant valve 98 may be turned on when the heat pump 100 performs the air conditioning function, or the simultaneous operation of the air conditioning function and the heating function. The liquid refrigerant valve 98 may be turned off when providing the heating function.

The hot water supply unit H may receive a compressed refrigerant from the outdoor unit O through the hot water supply inlet path 52. The hot water supply unit H may deliver the refrigerant to the outdoor unit O through a heat exchanger collection path 54.

The hot water supply circuit 4 may be configured to use heat of the refrigerant compressed by the compressor 12 for hot water supply.

The hot water supply circuit 4 may include a hot water supply heat exchanger 50 disposed to allow the refrigerant compressed by the compressor 12 to pass therethrough.

The hot water supply heat exchanger 50 may be implemented as a type of desuperheater in which a refrigerant superheated by the compressor 12 is condensed while exchanging heat with water used for the hot water supply.

The hot water supply heat exchanger 50 may include a refrigerant path through which the superheated refrigerant passes and a water path through which the water used for the hot water supply passes.

The hot water supply heat exchanger 50 may be configured as a double-pipe heat exchanger in which the refrigerant path and the water path are formed inside and outside with a heat transfer member therebetween. The hot water supply heat exchanger 50 may be configured as a plate-type heat exchanger in which the refrigerant path and the water path are formed alternately with the heat transfer member therebetween.

The hot water supply heat exchanger 50 may be connected to a hot water supply path 51 so that the refrigerant discharged from the compressor 12 is used for the hot water supply and then flows to a refrigeration cycle circuit 2.

The hot water supply path 51 may include a hot water supply inlet path 52 through which the refrigerant compressed by the compressor 12 flows to the hot water supply heat exchanger 50 and a hot water supply outlet path 54 through which the refrigerant discharged from the hot water supply heat exchanger 50 flows to the heating-cooling switching valve 40.

The hot water supply inlet path 52 and the hot water supply outlet path 54 may be disposed to correspond to the compressor 12 and the heating-cooling switching valve 40, respectively.

The hot water supply inlet path 52 may have one end connected to the compressor discharge path 26 and the other end connected to the hot water supply heat exchanger 50.

The hot water supply outlet path 54 may have one end connected to the hot water supply heat exchanger 50 and the other end connected to the compressor discharge path 26.

The hot water supply circuit 4 may include a hot water supply tank 58 connected to the hot water supply heat exchanger 50 via a hot water supply circulation path 56, and a hot water supply flow rate controller 60 installed in the hot water supply circulation path 56 to enable flow rate control.

The hot water supply tank 58 may be connected to a water supply part 62 through which external water is supplied to the hot water supply tank 58 and a water discharge part 64 through which the water in the hot water supply tank 58 is discharged.

The hot water supply tank 58 is also be possible to be configured so that water heated by the hot water supply heat exchanger 50 and then flowing into the hot water supply tank 58 is discharged directly through the water discharge part 64.

The hot water supply tank 58 has a hot water supply coil connected to the hot water supply circulation path 56 installed therein, so it is also possible that water heated by the hot water supply heat exchanger 50 passes through the hot water supply coil to heat an interior of the hot water supply tank 58, and water supplied through the water supply part 62 is heated by the hot water supply coil and discharged through the water discharge part 64.

The hot water supply flow rate controller 60, which controls a hot water supply rate while pumping the water in the hot water supply tank 58 to be circulated in the hot water supply heat exchanger 50 and the hot water supply tank 58, may include a hot water supply pump 66 installed in the hot water supply circulation path 56 and a hot water supply valve 68 installed in the hot water supply circulation path 56 having a variable opening degree.

The hot water supply flow rate controller 60 may control the hot water supply flow rate in the hot water supply circulation path 56 while the hot water supply pump 66 and the hot water supply valve 68 function as a variable capacity pump.

The hot water supply pump 66 is possible to be configured as a constant-speed pump or also configured as an inverter pump.

The hot water supply pump 66 is preferably configured as the constant-speed pump, which is less expensive than the inverter pump, since the hot water supply flow rate in the hot water supply circulation path 56 is controlled by adjusting the opening degree of the hot water supply valve 68.

The hot water supply valve 68 may be configured as an electronic expansion valve of which opening degree is controllable.

In the hot water supply circuit 4, a flow meter 70 that detects the flow rate of the hot water supply circulation path 56 may be installed in the hot water supply circulation path 56.

The floor heating circuit 6 may be configured to use the heat of the refrigerant that passes through the hot water supply heat exchanger 50 for indoor floor heating.

The floor heating circuit 6 may include a heating heat exchanger 72 disposed to allow the refrigerant that passes through the hot water supply heat exchanger 50 to pass therethrough.

The heating heat exchanger 72 may be connected to the hot water supply path 51 and a heating heat exchanger connection path 73 so that the refrigerant that passes through the hot water supply heat exchanger 50 heats water, and then flows to the hot water supply path 51.

The heating heat exchanger connection path 73 may include a floor heating inlet path 74 through which the refrigerant in the hot water supply discharge path flows into the heating heat exchanger 72 and a floor heating outlet path 76 through which the refrigerant that passes through the heating heat exchanger 72 flows out to the hot water supply outlet path 54.

A check valve 78 may be installed in the floor heating outlet path 76 to prevent the refrigerant in the hot water supply outlet path 54 from flowing back to the heating heat exchanger 72 through the floor heating outlet path 76.

The heating heat exchanger 72 may be a condensing heat exchanger in which the refrigerant primarily condensed by the hot water supply heat exchanger 50 is additionally condensed while exchanging heat with water.

The heating heat exchanger 72 may include a refrigerant path through which the refrigerant that passes through the hot water supply heat exchanger 50 and a water path through which water used for floor heating or indoor air conditioning and heating passes.

The heating heat exchanger 72 may be configured as a double-pipe heat exchanger in which the refrigerant path and the water path are formed inside and outside with the heat transfer member therebetween. The heating heat exchanger 72 may be configured as a plate-type heat exchanger in which the refrigerant path and the water path are formed alternately with the heat transfer member therebetween.

The heating heat exchanger 72 may be connected to a heating circulation path 82. The heating circulation path 82 may be connected to a floor heating pipe 80 installed in an indoor floor. In the floor heating circuit 6, a floor heating pump 84 is installed in the heating circulation path 82, heat of the refrigerant that passes through the hot water supply heat exchanger 50 may be additionally used for indoor floor heating.

The floor heating circuit 6 is possible to include a heating valve (not illustrated) which may control a heating flow rate like the hot water supply circuit 4.

The hot water supply unit H may include a heating heat exchanger refrigerant controller 86 that controls a flow of a refrigerant so that the refrigerant that passes through the hot water supply heat exchanger 50 passes through the heating heat exchanger 72 or bypasses the heating heat exchanger 72.

The heating heat exchanger 72 is directly connected to the hot water supply outlet path 54, and while it is possible to continuously use the refrigerant that passes through the hot water supply heat exchanger 4 for floor heating, it is preferable that the heating heat exchanger 72 is installed to allow a user to selectively perform a floor heating operation.

The heating heat exchanger refrigerant controller 86 may be a floor heating valve that operates to allow the refrigerant to pass through the heating heat exchanger 72 when the user or the like selects the floor heating.

The heating heat exchanger refrigerant controller 86 may control a flow direction of the refrigerant so that the refrigerant flows to the heating heat exchanger 72 when the operation of the heat pump 100 includes the floor heating operation. The heating heat exchanger refrigerant controller 86 may control the flow direction of the refrigerant so that the refrigerant bypasses the heating heat exchanger 72 when the operation of the heat pump 100 does not include the floor heating operation.

The heating heat exchanger refrigerant controller 86 may control the refrigerant to flow to the heating heat exchanger 72 when performing the floor heating operation, when performing the floor heating operation and a hot water supply operation, and/or when performing the floor heating operation, the hot water supply operation, and an air conditioning operation.

It is also possible to that the heating heat exchanger refrigerant controller 86 is configured as one 3-way valve installed in the hot water supply path 50, in particular, the hot water supply outlet path 54 to select a refrigerant outlet direction.

The refrigerant control valve 90 may be controlled so that the refrigerant compressed by the compressor 12 flows to the hot water supply heat exchanger 50 when the operation of the heat pump 100 includes at least one of the hot water supply operation and the floor heating operation. The refrigerant control valve 90 of a heat pump-type hot water supply system may control the refrigerant compressed by the compressor 12 to bypass the hot water supply heat exchanger 50 when the operation of the heat pump 100 does not include either the hot water supply operation or the floor heating operation.

The refrigerant control valve 90 may be controlled so that the refrigerant flows to the hot water supply heat exchanger 50 during the hot water supply operation. The refrigerant control valve 90 may be controlled so that the refrigerant flows to the hot water supply heat exchanger 50 during the simultaneously operation of the hot water supply operation and the air conditioning operation. The refrigerant control valve 90 may be controlled so that the refrigerant flows to the hot water supply heat exchanger 50 during the simultaneously operation of the hot water supply operation and the floor heating operation. The refrigerant control valve 90 may be controlled so that the refrigerant flows to the hot water supply heat exchanger 50 during a simultaneous operation of the hot water supply operation, the floor heating operation, and the air conditioning operation. The refrigerant control valve 90 may be controlled so that the refrigerant flows to the hot water supply heat exchanger 50 during the floor heating operation.

The refrigerant control valve 90 may be controlled so that the refrigerant bypasses the hot water supply heat exchanger 50 during the air conditioning operation. That is, the refrigerant control valve 90 may be controlled so that the refrigerant bypasses the hot water supply heat exchanger 50 during a space cooling operation. The refrigerant control valve 90 may be controlled so that the refrigerant bypasses the hot water supply heat exchanger 50 during a space heating operation.

The heat pump 100 may include a heat exchanger bypass path 92 connected to guide the refrigerant that passes through the hot water supply heat exchanger 50 between the outdoor heat exchanger 14 and the indoor heat exchanger 18 so that the refrigerant that passes through the hot water supply heat exchanger 50 bypasses one of the outdoor heat exchanger 14 and the indoor heat exchanger 18.

The heat exchanger bypass path 92 may have one end connected to the hot water supply path 50 and the other end connected between the indoor expansion mechanism 17 and the outdoor expansion mechanism 16.

The heat exchanger bypass path 92 may have one end connected to the hot water supply outlet path 54 in the hot water supply path 50, and the other end connected to the expansion mechanism connection pipe 36. The heat exchanger bypass path 92 may guide the hot water supply outlet path 54 between the indoor expansion mechanism 17 and the outdoor expansion mechanism 16.

The refrigerant guided to the heat exchange bypass path 92 may be expanded by the indoor expansion mechanism 17, and then evaporated by the indoor heat exchanger 18, and collected to the compressor 12. The refrigerant guided to the heat exchange bypass path 92 may be expanded by the outdoor expansion mechanism 16, and then evaporated by the outdoor heat exchanger 14, and collected to the compressor 12.

In other words, when the refrigerant is guided between the indoor expansion mechanism 17 and the outdoor expansion mechanism 16 through the heat exchanger bypass path 92, no condensation process occurs in the refrigeration cycle circuit 2, and only an expansion process and an evaporation process may occur. In this case, heat transfer amounts in the hot water supply heat exchanger 50 and the heating heat exchanger 72 are increased, and hot water supply efficiency and floor heating efficiency may be improved.

The heat pump 100 may include an auxiliary refrigerant control valve 94 which controls the flow direction of the refrigerant that passes through the hot water supply heat exchanger 50 so that the refrigerant passes through or bypasses the heat exchanger bypass path 92.

When the operation of the heat pump-type hot water supply system includes both operations of the hot water supply operation and the air conditioning operation, the auxiliary refrigerant control valve 94 may control the refrigerant that passes through the hot water supply heat exchanger 50 to bypass the heat exchanger bypass path 92.

During the simultaneous operation of the hot water supply operation and the air conditioning operation, the auxiliary refrigerant control valve 94 may be controlled so that the refrigerant that passes through the hot water supply heat exchanger 50 bypasses the heat exchanger bypass path 92. During the simultaneous operation of the hot water supply operation, the floor heating operation, and the air conditioning operation, the auxiliary refrigerant control valve 94 may be controlled so that the refrigerant that passes through the hot water supply heat exchanger 50 bypasses the heat exchanger bypass path 92.

During the air conditioning operation, the auxiliary refrigerant control valve 94 may be controlled so that the refrigerant that passes through the hot water supply heat exchanger 50 flows to the heat exchanger bypass path 92. During the hot water supply operation, the auxiliary refrigerant control valve 94 may be controlled so that the refrigerant that passes through the hot water supply heat exchanger 50 flows to the heat exchanger bypass path 92. During the simultaneous operation of the hot water supply operation and the floor heating operation, the auxiliary refrigerant control valve 94 may be controlled so that the refrigerant that passes through the hot water supply heat exchanger 50 bypasses the heat exchanger bypass path 92. During the floor heating operation, the auxiliary refrigerant control valve 94 may be controlled so that the refrigerant that passes through the hot water supply heat exchanger 50 flows to the heat exchanger bypass path 92.

When a defrosting condition is met during the hot water supply operation, the auxiliary refrigerant control valve 94 may be controlled so that the refrigerant that passes through the hot water supply heat exchanger 50 bypasses the heat exchanger bypass path 92. In this case, when the refrigeration cycle circuit 2 is switched from a heating operation to a cooling operation for defrosting the outdoor heat exchanger 14, a high-temperature refrigerant that passes through the hot water supply heat exchanger 50 may flow into the outdoor heat exchanger 14, and the outdoor heat exchanger 14 may be defrosted.

The heat pump 100 may further include a heat exchanger bypass valve 96 installed in the heat exchanger bypass path 92 to control the flow of the refrigerant, and a liquid refrigerant valve 98 installed between the heat exchanger bypass line 92 and the indoor expansion mechanism 17 to control the flow of the refrigerant.

The heat exchanger bypass valve 96 may be opened when the hot water supply operation and the floor heating operation are performed simultaneously, when the floor heating operation is performed, or when the hot water supply operation is performed. The heat exchanger bypass valve 96 may be closed when the air conditioning is performed, the air conditioning operation and the hot water supply operation are performed simultaneously, or the air conditioning operation, the hot water supply operation, and the floor heating operation are performed simultaneously.

The liquid refrigerant valve 98 may be opened when the air conditioning is performed, the air conditioning operation and the hot water supply operation are performed simultaneously, or the air conditioning operation, the hot water supply operation, and the floor heating operation are performed simultaneously. The liquid refrigerant valve 98 may be closed when the hot water supply operation and the floor heating operation are performed simultaneously, the floor heating operation is performed, or the hot water supply operation is performed.

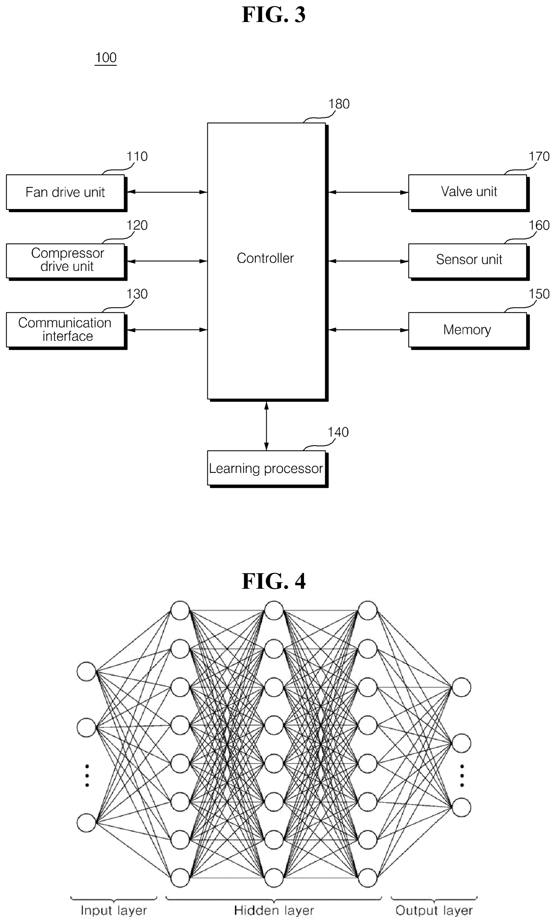

Fig. 3 is a block diagram of a heat pump according to an embodiment of the present disclosure.

Referring to Fig. 3, the heat pump 100 may include a fan drive unit 110, a compressor drive unit 120, a communication interface 130, a learning processor 140, a memory 150, a sensor unit 160, a valve unit 170, and/or a controller 180.

The fan drive unit 110 may drive at least one fan provided in the heat pump 100. For example, the fan drive unit 110 may drive an outdoor fan 30 and/or an indoor fan 39.

The fan drive unit 110 may include a rectifier (not illustrated) rectifying and outputting an alternating current (AC) power into a direct current (DC) power, and outputting the DC power, a dc-terminal capacitor (not illustrated) storing a pulse voltage from the rectifier, an inverter (not illustrated) including a plurality of switching elements, and converting and outputting a smoothed DC power into a 3-phase AC power having a predetermined frequency, and/or motors 31 and 33 driving fans 30 and 39 according to the 3-phase AC power output from the inverter.

The fan drive unit 110 may separately include components for driving the outdoor fan 30 and the indoor fan 39, respectively. For example, the fan drive unit 110 may include an outdoor fan motor 31 corresponding to the outdoor fan 30 and an indoor fan motor 33 corresponding to the indoor fan 39.

The compressor drive unit 120 may drive the compressor 12. The compressor drive unit 120 may include a rectifier (not illustrated) rectifying and outputting the alternating current (AC) power into the direct current (DC) power, and outputting the DC power, a dc-terminal capacitor (not illustrated) storing the pulse voltage from the rectifier, an inverter (not illustrated) including the plurality of switching elements, and converting and outputting the smoothed DC power into the 3-phase AC power having a predetermined frequency, and/or a compressor motor (not illustrated) driving the compressor 12 according to the 3-phase AC power output from the inverter.

The communication interface 130 may include at least one communication module. The communication interface 130 may be provided in each of the outdoor unit O and the indoor unit I, and the outdoor unit O and the indoor unit I may transmit/receive data to/from each other. For example, a communication scheme between the outdoor unit O and the indoor unit I may be a communication scheme using a power line, a serial communication scheme (e.g., RS-485 communication), a wired communication scheme through a refrigerant pipe, as well as a wireless communication scheme.

The communication interface 130 may transmit and receive data to and from an external device. For example, the communication interface 130 may receive data for power stored in the battery module 410 from the energy storage system (ESS) 400 and request supply of the power stored in the battery module 410. For example, the communication interface 130 may establish a wireless communication channel with an external device (e.g., a mobile terminal) and may transmit and receive data for a state of each component provided in the heat pump 100, whether an error occurs, etc., through the established wireless communication channel. For example, the communication interface 130 may transmit and receive data by accessing a server connected to an external network.

Communication technologies used by the communication interface 130 include Global System for Mobile communication (GSM), Code Division Multi Access (CDMA), Long Term Evolution (LTE), 5G, Wireless LAN (WLAN), Wireless-Fidelity (Wi-Fi), Bluetooth™, Radio Frequency Identification (RFID), Infrared Data Association (IrDA), ZigBee, and Near Field Communication (NFC).

The learning processor 140 may train a model configured by an artificial neutral network by using learning data. Here, the trained artificial neural network may be referred to as a learning model. The learning model may be used to infer a result value for new input data other than training data, and the inferred value may be used as a basis of a determination for performing any operation. The learning model will be described below with reference to Fig. 4.

The learning processor 140 may include a memory integrated or implemented in the heat pump 100. Alternatively, the learning processor 140 may be implemented using the memory 150, an external memory directly coupled to the heat pump 100, or a memory held in the external device.

The learning processor 140 may be included in the controller 180 or may be configured separately from the controller 180.

The memory 150 may also store a program for each signal processing or control in the controller 180, and store a signal-processed voice or data signal. For example, the memory 150 may store application programs designed for a purpose of performing various tasks which are enabled to be processed by the controller 180, and selectively provide some of the stored application programs upon a request by the controller 180. Programs stored in the memory 150 are not particularly limited as long as they may be executed by the controller 180.

An embodiment is illustrated in which the memory 150 of Fig. 3 is separately provided from the controller 180, but the scope of the present disclosure is not limited thereto, and the memory 150 may also be included in the controller 180.

The memory 150 may store predetermined data related to the operation of the heat pump 100 (hereinafter, referred to as operation data). For example, the memory 150 may store data for detection values detected by a plurality of sensors provided in the sensor unit 160. For example, the memory 150 may store operation data for an operation frequency of the compressor 12, an indoor temperature, an outdoor temperature, an operation mode, etc. Meanwhile, the memory 150 may store at least one learning model.

The memory 150 may include, for example, at least one of a volatile memory (e.g., DRAM, SRAM, SDRAM, etc.) or a non-volatile memory (e.g., a flash memory, a hard disk drive (HDD), a solid-state drive (SSD), etc.).

The sensor unit 160 may include at least one sensor. The sensor unit 160 may transmit data for a sensing value detected through at least one sensor to the controller 180.

At least one sensor provided in the sensor unit 160 may be disposed inside the outdoor unit O and/or the indoor unit I. For example, the sensor unit 160 may include a heat exchanger temperature sensor that detects a temperature of the outdoor heat exchanger 14, a pressure sensor that detects a pressure of a gas refrigerant which flows through each pipe, a pipe temperature sensor that detects a temperature of a fluid which flows through each pipe, and the like.

The sensor unit 160 may include an indoor temperature sensor detecting an indoor temperature and/or an outdoor temperature sensor detecting an outdoor temperature. For example, the outdoor temperature sensor may be disposed in the outdoor unit O and the indoor temperature sensor may be disposed in the indoor unit I.

The valve unit 170 may include at least one valve. At least one valve included in the valve unit 170 may operate according to control by the controller 180. For example, the valve unit 170 may include the cooling/heating switching valve 40, the refrigerant control valve 90, the auxiliary refrigerant control valve 94, the heat exchanger bypass valve 96, the liquid refrigerant valve 98, and the like.

The controller 180 may be connected to each component provided in the heat pump 100, and may control an overall operation of each component. The controller 180 may transmit and receive data to and from each component provided in the heat pump 100.

The controller 180 may be provided in at least one of the indoor unit I and/or the hot water supply unit H as well as the outdoor unit O. The controller 180 may also be configured as a unit separate from the outdoor unit O, the indoor unit I, and the hot water supply unit H.

The controller 180 may include at least one processor, and control an overall operation of the heat pump 100 by using the processor included therein. Here, the processor may be a general processor such as a central processing unit (CPU). Of course, the processor may be a dedicated device such as an ASIC or another hardware based processor.

The controller 180 may control an operation of the fan drive unit 110. For example, the controller 180 may change a rotation speed of the outdoor fan 30 by changing the frequency of the 3-phase AC power output to the outdoor fan motor 31 through controlling the operation of the fan drive unit 110.

The controller 180 may control an operation of the compressor drive unit 120. For example, the controller 180 may change the operation frequency of the compressor 12 by changing the frequency of the 3-phase AC power output to the compressor motor through controlling the operation of the compressor drive unit 120.

The learning processor 140 and/or the controller 180 learns the operation data stored in the memory 150 through machine learning such as deep learning, etc., to generate a learning model. The controller 180 may control each component provided in the heat pump 100 by using the operation data stored in the memory 150 and a pre-trained learning model. Hereinafter, the machine learning will be described in detail with reference to Fig. 4.

Fig. 4 is a diagram referenced for describing machine learning according to an embodiment of the present disclosure.

Machine learning refers to a technology in which a computer learns from data without a human's instructing the computer directly to logic, so that the computer can solve a problem.

Deep learning is a method of teaching a computer a human way of thinking based on artificial neural networks (ANN) and the like, that is, an artificial intelligence technology which allows computers to learn on their own like humans. The ANN may be implemented in the form of software or in the form of hardware such as a chip. For example, the ANN may include various types of algorithms such as a deep neural network (DNN), a convolutional neural network (CNN), a recurrent neural network (RNN), a deep belief network (DBN), etc.

Referring to FIG. 4, the ANN may include an input layer, a hidden layer, and an output layer. Each layer may include a plurality of nodes, each layer may be connected to a next layer, and nodes between neighboring layers may be connected to each other with a weight.

A computer may discover a certain pattern from data to form a feature map and extract a low-level feature, a middle-level feature, and a high-level feature to recognize an object and output a result.

In addition, each node may operate based on an activation model, and an output value corresponding to an input value may be determined by an activation model.

An output value of an arbitrary node, for example, a node of low-level feature, may be input to a next layer connected to the corresponding node, for example, a node of intermediate-level feature. A node of a next layer, for example, a node of intermediate-level feature may receive values output from a plurality of nodes of lower-level feature.

In this case, an input value of each node may be a value in which a weight is applied to an output value of the node of the previous layer. A weight may refer to a connection strength between nodes. In addition, a deep learning process may be regarded as a process of finding out appropriate weights and biases.

Meanwhile, an output value of an arbitrary node, for example, an intermediate-level feature, may be input to a next layer connected to the corresponding node, for example, a node of higher-level feature. A node of a next layer, for example, a node of a higher-level feature, may receive values output from a plurality of nodes of intermediate-level feature.

An ANN may extract feature information corresponding to each level by using a learned layer corresponding to a corresponding level. The ANN may recognize a predetermined object by sequentially abstracting and utilizing feature information of a highest level.

Meanwhile, learning of the ANN may be accomplished by adjusting the weight of the connection line between nodes so that a desired output is obtained with respect to input data, and a bias value may also be adjusted, if necessary. In addition, the ANN may continuously update a weight value by learning. In addition, a method such as back-propagation and the like may be used for learning of the ANN.

The memory 150 may store data obtained from each component provided in the heat pump 100, data for learning of the ANN, and the like. For example, the memory 150 may store a database including data for each component provided in the heat pump 100 for the purpose of learning of the ANN, weights and biases included in the structure of the ANN, and the like.

Meanwhile, the controller 370 may include a data acquirer (not shown), a model learning part (not shown), and/or a result calculator (not shown).

The data acquirer may acquire data on each component provided in the heat pump 100 and determine input data that is a target to be learned among the acquired data.

The model learning part may generate a learning model by learning the input data. The model learning part may update a pre-generated learning model based on data on each component provided in the heat pump 100.

The result calculator may calculate result data corresponding to input data by using the input data and the pre-learned learning model from among the data on each component provided in the heat pump 100.

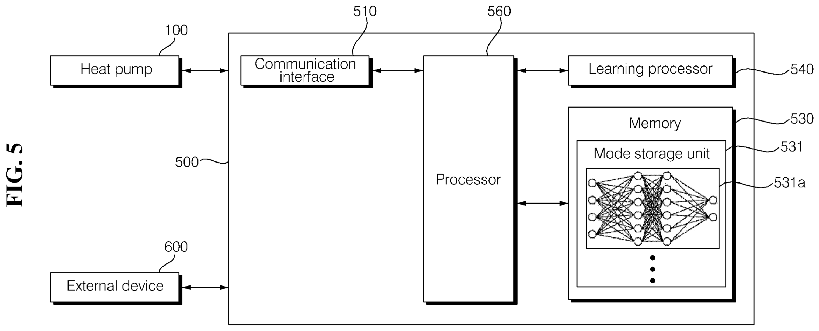

Fig. 5 is a block diagram of a server according to embodiment of the present disclosure.

Referring to Fig. 5, the system 1 may further include a server 500 and/or an external device 600. The server 500 may communicate with the heat pump 100. The server 500 may communicate with the external device 600. Meanwhile, the heat pump 100 may also communicate with the external device 600.

The server 500 may train an artificial neural network using a machine learning algorithm. The server 500 may calculate result data corresponding to input data using the trained artificial neural network. Here, the server 500 may is constituted by a plurality of servers to perform distribution processing, and may be defined as a 5G network. In this case, the server 500 may be included in a partial configuration of the heat pump 100 to perform at least some of processings related to the machine learning.

The server 500 may include a communication interface 510, a memory 530, a learning processor 540, and/or a processor 560.

The communication interface 510 may transmit and receive data to and from an external device. For example, the communication interface 510 may communicate with the heat pump 100, the energy storage device (ESS) 400, the external device 600, and/or an external server corresponding to the energy storage device (ESS) 400.

The memory 530 may include a mode storage unit 531. The model storage unit 531 may store a model (or artificial neural network, 531a) that is being trained or has been trained through the learning processor 540.

The learning processor 540 may train the artificial neural network 531a using learning data. A learning model may be used while being mounted on the server 500 of the artificial neural network, or may be used by being mounted on an external device such as the heat pump 100.

The learning processor 540 may also be included in the processor 560, or may be configured separately from the processor 560.

The learning model may be implemented in hardware, software, or a combination of hardware and software. When a part or an entirety of the learning model is implemented in software, one or more instructions constituting the learning model may be stored in the memory 530.

The processor 560 may infer a result value for new input data using the learning model, and generate a response or a control command based on the inferred result value.

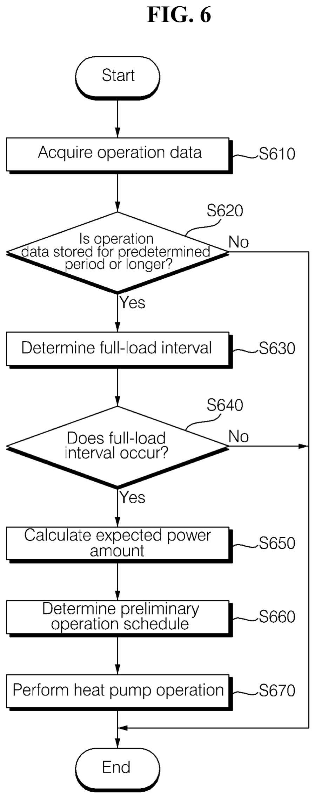

Fig. 6 is a flowchart illustrating an operation method of a heat pump according to an embodiment of the present disclosure.

Referring to Fig. 6, the heat pump 100 may acquire operation data in operation S610. For example, the heat pump 100 may acquire an operation mode, an indoor temperature, an outdoor temperature, a hot water supply set temperature, a cooling set temperature, a floor heating set temperature, a temperature of water supplied to the water supply unit 62, a temperature of water discharged from the water discharge unit 64, a temperature of water stored in the hot water supply tank 58, a temperature of water flowing through the heating circulation path 82, an operating frequency of the compressor 12, a temperature of a refrigerant discharged from the compressor 12 (hereinafter, referred to as a discharge temperature), a pressure of a refrigerant discharged from the compressor 12 (hereinafter, referred to as a discharge pressure), a temperature of a refrigerant flowing into the compressor 12 (hereinafter, referred to as a suction temperature), pressure of refrigerant flowing into the compressor 12 (hereinafter, referred to as a suction pressure), a power amount used by the heat pump 100, a power amount supplied from the power grid 200, a power amount stored in the energy storage system (ESS) 400, a charging state of the battery module 410, a power amount supplied from the energy storage system (ESS) 400, and the like.

The heat pump 100 may store the acquired operation data. For example, the heat pump 100 may store the acquired operation data in the memory 150. For example, the heat pump 100 may transmit the acquired operation data to the server 500 so that the acquired operation data is stored in the memory 530 of the server 500. In the present disclosure, it is described as an example that the operation data is stored in the memory 150 of the heat pump 100.

The heat pump 100 may, in operation S620, confirm whether the operation data has been stored for a preset period or longer. For example, the heat pump 100 may confirm whether the operation data is stored for a preset period (e.g., 1 week) or longer after an initial operation starts.

The heat pump 100 may, in operation S630, determine a full-load interval. The heat pump 100 may determine a timing, a period, etc., when the full-load interval occurs after a current timing. That is, the heat pump 100 may predict a full-load interval that will occur thereafter. Here, the full-load interval may refer to a time interval during which a load of the heat pump 100 corresponds to a full-load while the heat pump 100 is operating normally. For example, when the load of the heat pump 100 corresponds to the full-load, the load of the heat pump 100 may correspond to a maximum value. In this case, during the full-load interval, the operating frequency of the compressor 12 may correspond to a preset maximum frequency.

The full-load interval in the heat pump 100 may occur when high-temperature water is used, such as for hot water supply or floor heating. For example, when a user sets an operating mode of the heat pump 100 to a hot water supply operation to use hot water, the heat pump 100 may raise a temperature of water stored in the hot water supply tank 58 to a hot water supply set temperature. In this case, in order to rapidly provide the hot water to the user, the heat pump 100 may set the operating frequency of the compressor 12 to correspond to a maximum frequency, thereby rapidly raising the temperature of the water stored in the hot water supply tank 58 to the hot water supply set temperature. Here, the hot water supply set temperature may be referred to as a target temperature for the water stored in the hot water supply tank. In the present disclosure, the occurrence of the full-load interval in the heat pump 100 due to the user's hot water usage will be described as an example.

According to an embodiment, the heat pump 100 may determine the full-load interval according to a predetermined cycle. The predetermined cycle may be set to 6 hours, 12 hours, 24 hours, etc. For example, the heat pump 100 may predict a full-load interval occurring during 24 hours based on midnight.

The heat pump 100 may determine the full-load interval based on the operation data stored in the memory 150. For example, the heat pump 100 may determine the full-load interval by calculating a pattern in which the operating frequency of the compressor 12 is changed. In this case, the heat pump 100 may determine the full-load interval based on a timing, a period, etc., in which the operating frequency of the compressor 12 is changed. For example, the heat pump 100 may determine the full-load interval by calculating a pattern in which a temperature of water stored in the hot water supply tank 58 is changed. In this case, the heat pump 100 may determine the full-load interval based on a timing when the temperature of the water stored in the hot water supply tank 58 decreases, a timing when the temperature of the water increases, a degree at which the temperature of the water stored in the hot water supply tank 58 is changed, etc.

According to an embodiment, the heat pump 100 may determine the full-load interval using a learning model that predicts the full-load interval. For example, input values of the learning model that predicts the full-load interval may include a day of a week, an operation mode, an outdoor temperature, a hot water supply set temperature, a temperature of the water stored in the hot water supply tank 58, a temperature of the water supplied to the water supply unit 62, a temperature of the water discharged from the water outlet unit 64, discharge temperature, a suction temperature, etc. For example, output values of the learning model may include a timing, a period, etc., of the full-load interval.

According to an embodiment, the heat pump 100 may determine the full-load interval according to data related to the user received from the server 500 and/or the external device 600. For example, when the heat pump 100 receives data for a timing when the user returns home, the heat pump 100 may determine the timing when the user returns home as the full-load interval. For example, when the heat pump 100 receives data for serving hot water supply usage, the heat pump 100 may determine a predetermined timing set for using hot water as the full-load interval.

The heat pump 100 may determine whether the full-load interval will occur in operation S640. For example, when the full-load interval does not occur, the heat pump 100 may perform an operation according to a user input, a preset setting value, etc.

The heat pump 100 may calculate an estimated amount of power to be expected to use in a preliminary operation (hereinafter, referred to as an estimated amount of power), based on determining that the full-load interval occurs in operation S650. Here, the preliminary operation may refer to an operation of the heat pump 100 that satisfies a predetermined condition corresponding to the full-load interval. For example, the heat pump 100 may perform a preliminary operation that raises the temperature of the water stored in the hot water supply tank 58 to the hot water supply set temperature, prior to a predetermined timing corresponding to the full-load interval.

The heat pump 100 may calculate the estimated amount of power for each interval corresponding to the predetermined time. For example, when the predetermined time is 5 minutes, the heat pump 100 may calculate an estimated amount of power that the heat pump 100 performing the preliminary operation is expected to use for 5 minutes. Meanwhile, the heat pump 100 may calculate the estimated amount of power for each of various intervals including a 5-minute interval, a 10-minute interval, a 30-minute interval, a 1-hour interval, etc.

The heat pump 100 may calculate an expected power consumption corresponding to various conditions. For example, the heat pump 100 may calculate an estimated amount of power for each of combinations of various conditions such as the operating frequency of the compressor 12, the outdoor temperature, the hot water supply set temperature, and the temperature of the water stored in the hot water supply tank 58.

That is, the heat pump 100 may calculate the estimated amount of power for each of various intervals based on various conditions. For example, the heat pump 100 may calculate an estimated amount of power that the heat pump 100 is expected to use for 5 minutes of performing the preliminary operation for each frequency set as the operating frequency of the compressor 12.

The heat pump 100 may calculate the estimated amount of power using a learning model that predicts the estimated amount of power For example, input values of the learning model that predicts the estimated amount of power may include the operation mode, the outdoor temperature, the indoor temperature, the hot water supply set temperature, the temperature of the water stored in the hot water supply tank 58, the operating frequency of the compressor 12, whether hot water supply is used, whether floor heating is used, etc. For example, output values of the learning model that predicts the estimated amount of power may include the estimated amount of power, a temperature change amount of the water stored in the hot water supply tank 58, etc.

The heat pump 100 may, in operation S660, determine a schedule for controlling the load of the heat pump 100 in the preliminary operation. Here, the schedule may include a sequence for set values e.g., the operating frequency of the compressor 12) that are set for respective components included in the heat pump 100. For example, the heat pump 100 may schedule the operating frequency of the compressor 12 in a predetermined interval during which the preliminary operation is performed. In this case, the schedule may include a sequence for the operating frequency of the compressor 12 set for each interval corresponding to a predetermined time.

The heat pump 100 may determine a schedule that minimizes the power amount used in the preliminary operation. The heat pump 100 may calculate a total amount of power used in the preliminary operation based on a combination of estimated amounts of power calculated for each interval corresponding to the predetermined time. In this case, the heat pump 100 may determine the schedule for the preliminary operation based on a combination of estimated amounts of power that minimizes the total amount of power used in the preliminary operation.

According to an embodiment, the heat pump 100 may determine the schedule based on a rule-based learning schemed, a linear optimization scheme, etc. For example, the heat pump 100 may determine the schedule based on an objective function for the total amount of power used in a preliminary operation of Equation 1 below. In this case, the heat pump 100 may determine a schedule that minimizes the objective function.

[Equation 1]

$$f_{opt}(t) = \arg\min_{f} \int_{t_s}^{t_e} P(f(t), T(t), T_{ext}(t))\, dt$$

f may represent the operating frequency of the compressor 12, T may represent the temperature of the water stored in the hot water supply tank 58, Text may represent the outdoor temperature, P may represent the estimated amount of power, ts may represent a start timing of the preliminary operation, te may represent an end timing of the preliminary operation, and fopt may represent the schedule. In the present disclosure, the estimated amount of power is described as corresponding to the operating frequency of the compressor 12, the temperature of the water stored in the hot water supply tank 58, and the outdoor temperature, but is not limited thereto.

Meanwhile, the heat pump 100 may determine the schedule that minimizes the objective function for the total amount of power used in the preliminary operation based on a constraint condition of Equation 2 below.

[Equation 2]

$$\frac{d}{dt}T(t) = q(f(t), T(t), T_{ext}(t))$$

$$\int_{t_s}^{t_e} q(f(t), T(t), T_{ext}(t))dt = T_e - T_s$$

$$T(t_s) = T_s$$

$$T(t_e) = T_e$$

q may represent the change amount in the temperature of the water stored in the hot water supply tank 58, Te may represent the temperature of the water stored in the hot water supply tank 58 at the start timing of the preliminary operation, and Te may represent the temperature of the water stored in the hot water supply tank 58 at the end timing of the preliminary operation.

According to an embodiment, the heat pump 100 may determine a schedule that minimizes a rate corresponding to the total amount of power used in the preliminary operation. In this case, the cost corresponding to the power amount used in the preliminary operation may correspond to a time-of-use (ToU) rate for the use of power supplied from the power grid 200 and/or a charge state of the battery module 410. For example, the heat pump 100 may determine the schedule based on an objective function for a rate corresponding to a total amount of power used in a preliminary operation of Equation 3 below.

[Equation 3]

$$f_{opt}(t) = \arg\min_{f} \int_{t_s}^{t_e} P(f(t), T(t), T_{ext}(t)) \cdot \text{ToU}(t) \, dt$$

ToU may represent a time-of-use rate for the use of the power supplied from the power grid 200.

Meanwhile, when the heat pump 100 performs the preliminary operation, as the power of the heat pump 100 that receives from the energy storage system (ESS) 400 increases, the rate corresponding to the total amount of power used in the preliminary operation may decrease. For example, the heat pump 100 may determine the schedule based on an objective function for a rate corresponding to a total amount of power used in a preliminary operation of Equation 4 below.

[Equation 4]

$$f_{opt}(t) = \arg\min_{f} \int_{t_s}^{t_e} (P(f(t), T(t), T_{ext}(t)) - P_{ess}(t)) \cdot \text{ToU}(t) \, dt$$

Pess may represent a power amount which is suppliable from the energy storage system (ESS) 400, which corresponds to the charge state of the battery module 410. For example, when the heat pump 100 uses the only power supplied from the energy storage system (ESS) 400 during the preliminary operation, the rate corresponding to the total amount of power used in the preliminary operation may be minimized.

The heat pump 100 may, in operation S670, perform the operation according to the schedule for controlling the load of the heat pump 100 in the preliminary operation. For example, the heat pump 100 may control the operating frequency of the compressor 12 according to the schedule.

Meanwhile, at least some of the operations of the heat pump 100 described in Fig. 6 may also be performed by the server 500. For example, the server 500 may acquire the operation data from the heat pump 100. For example, the server 500 may calculate an estimated amount of power for the full-load interval and/or the preliminary operation of the heat pump 100. For example, the server 500 may determine the schedule for the preliminary operation and deliver the determined schedule to the heat pump 100.

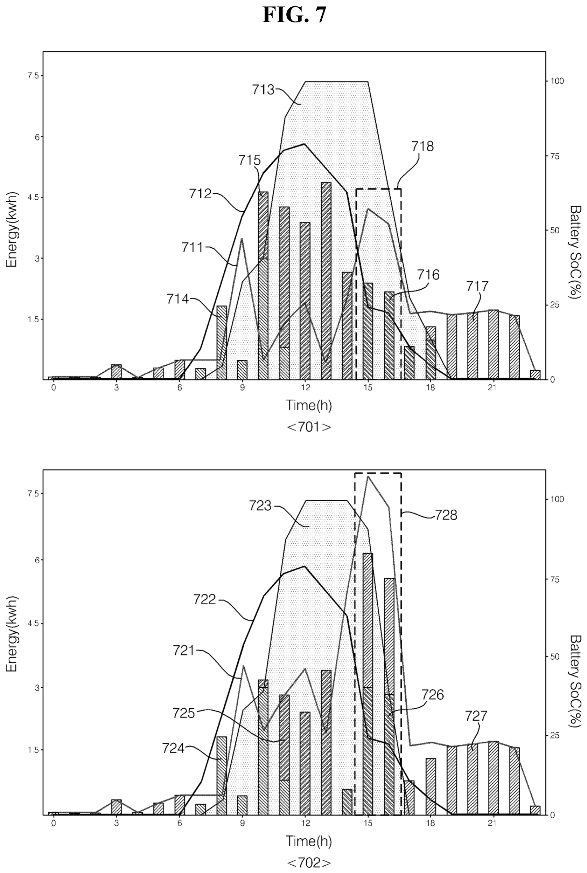

Fig. 7 is a diagram illustrating graphs corresponding to power used and/or produced by the system 1 according to an embodiment of the present disclosure.

The graphs illustrated in Fig. 7 may represent, for each time zone, power amounts 711 and 721 used by the heat pump 100, power amounts 712 and 722 produced by the system 1, charging states 713 and 723 of the battery module 410, power amounts 714 and 724 charged in the battery module 410, surplus power amounts 715 and 725 produced by the system 1, power amounts 716 and 726 supplied from the energy storage system (ESS) 400 to the heat pump 100, power amounts 717 and 727 supplied from the power grid 200 to the heat pump 100, etc.

Referring to reference numeral 701, in a first peak interval 718 where the power amount 711 used by the heat pump 100 is maximum, power may not be supplied from the power grid 200 to the heat pump 100. That is, in the first peak interval 718, the operation of the heat pump 100 according to a user demand may be possible with only the power supplied from the energy storage system (ESS) 400. The first peak interval 718 may not correspond to the full-load interval.

Referring to reference numeral 702, in a second peak interval 728 where the power amount 721 used by the heat pump 100 is maximum, power may be supplied to the heat pump 100 from both the power grid 200 and the energy storage system (ESS) 400. That is, in the second peak interval 728, the operation of the heat pump 100 according to the user demand may be impossible with only the power supplied from the energy storage system (ESS) 400. In this case, the heat pump 100 may receive additional power from the power grid 200 to perform the operation according to the user demand. The second peak interval 728 may correspond to the full-load interval.

Meanwhile, there may be the surplus power amount 725 produced by the system 1 prior to the second peak interval 728. In this case, by utilizing the power amount 724 stored in the energy storage system (ESS) 400 and/or the surplus power amount 725 produced by the system 1 prior to the second peak interval 728 to perform the preliminary operation of the heat pump 100 in response to the user demand, the power supplied to the heat pump 100 from the power grid 200 during the second peak interval 728 may be reduced.

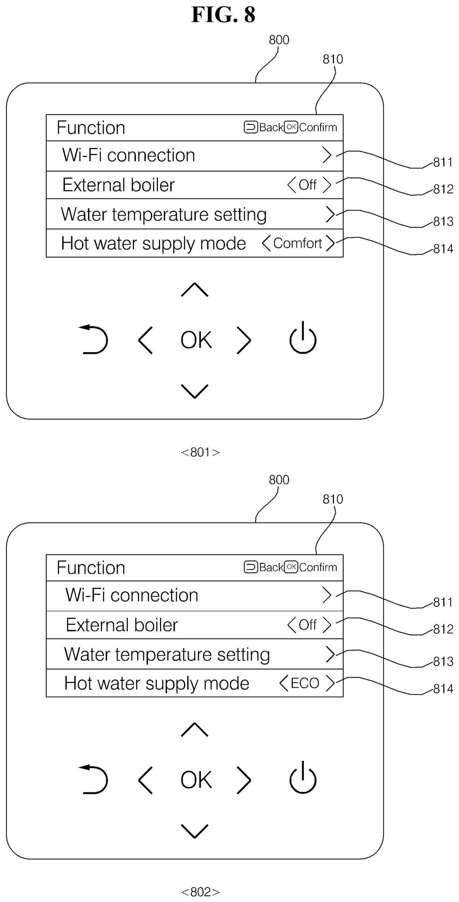

Referring to Fig. 8, the remote controller 800 may deliver a control command of the user to the heat pump 100. The remote controller 800 may output information for the heat pump 100. The remote controller 800 may communicate with the controller 180 of the heat pump 100 wiredly or wirelessly.

The remote controller 800 may output a screen 810 displaying a setting related to the operation of the heat pump 100. For example, the remote controller 800 may display a communication-related setting 811, an external boiler-related setting 812, a water temperature-related setting 813, a hot water supply operation related setting 814, etc., of the heat pump 100.

Referring to reference numeral 801, when the hot water supply operation related setting 814 is set to 'Comfort', the heat pump 100 may raise the water temperature as quickly as possible to the hot water supply set temperature when the user uses hot water supply. In this case, the heat pump 100 may determine the full-load interval in which the operating frequency of the compressor 12 is set to the maximum frequency. For example, the heat pump 100 may receive power from both the power grid 200 and the energy storage system (ESS) 400 based on a hot water supply demand of the user, and compress the refrigerant with the operating frequency of the compressor 12 set to the maximum frequency.

Meanwhile, referring to reference numeral 802, when the hot water supply operation related setting 814 is set to 'ECO', the heat pump 100 may pre-raise the water temperature according to the hot water supply set temperature before the user uses the hot water supply. For example, the heat pump 100 may receive power from the energy storage system (ESS) 400, and compress the refrigerant with the operating frequency of the compressor 12 set to a frequency lower than the maximum frequency, before the user uses the hot water supply.

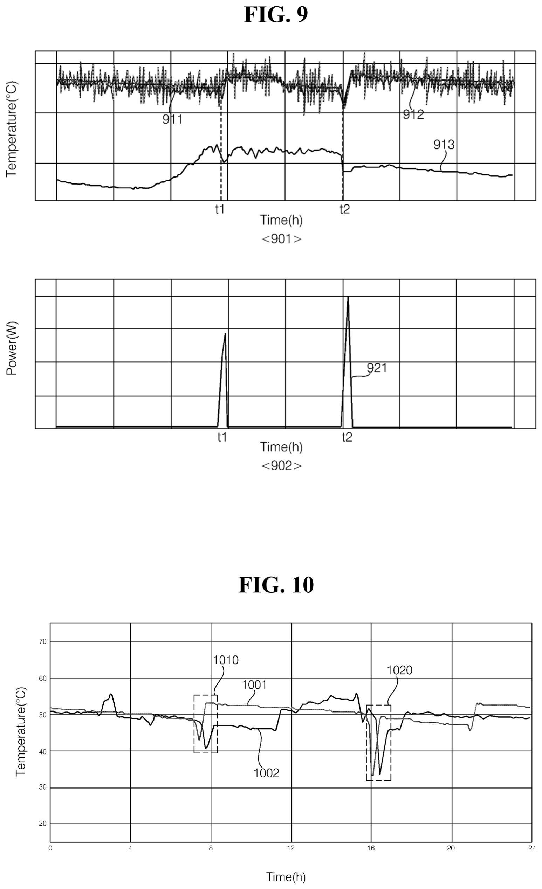

Referring to Fig. 9, the heat pump 100 may calculate an expected pattern 912 for the temperature of the water stored in the hot water supply tank 58 based on the operation data. For example, the heat pump 100 may determine the expected pattern 912 for the temperature stored in the hot water supply tank 58 using a preset learning model. In this case, a temperature 911 of the water stored in the hot water supply tank 58 when the hot water supply operation related setting is set to 'Comfort' may correspond to the expected pattern 912 for the temperature of the water stored in the hot water supply tank 58.

When the hot water supply operation related setting is set to 'Comfort', the heat pump 100 may raise the temperature of the water stored in the hot water supply tank 58 at timings t1 and t2 when the user uses the hot water supply. In this case, the timings t1 and t2 when the temperature of the water stored in the hot water supply tank 58 is raised may correspond to the full-load interval in which the power 921 used in the heat pump 100 becomes maximum.

The heat pump 100 may determine the full-load interval using the learning model that predicts the full-load interval. For example, input values of the learning model that predicts the full-load interval may include the operating mode, temperatures 911 and 912 of the water stored in the hot water supply tank 58, an outdoor temperature 913, etc. For example, output values of the learning model may include the timings t1 and t2 of the full-load interval.

Referring to Fig. 10, the heat pump 100 may calculate an expected pattern 1002 for the temperature of the water stored in the hot water supply tank 58. For example, the heat pump 100 may determine the expected pattern 1002 for the temperature stored in the hot water supply tank 58 using a preset learning model. The expected pattern 1002 of the temperature of the water stored in the hot water supply tank 58 may correspond to an actual pattern 1001 of the temperature of the water stored in the hot water supply tank 58.

The heat pump 100 may determine that the user uses the hot water supply when a degree at which the temperature of the water stored in the hot water supply tank 58 decreases is equal to or higher than a certain level. When a degree at which the temperature of the water stored in the hot water supply tank 58 increases is equal to or higher than a certain level, the heat pump 100 may determine that the temperature of the water stored in the hot water supply tank 58 increases by the refrigerant compressed by the compressor 12. In this case, the heat pump 100 may determine, as the full-load interval, intervals 1010 and 1020 in which a degree at which the temperature of the water stored in the hot water supply tank 58 is changed is equal to or higher than a certain level.

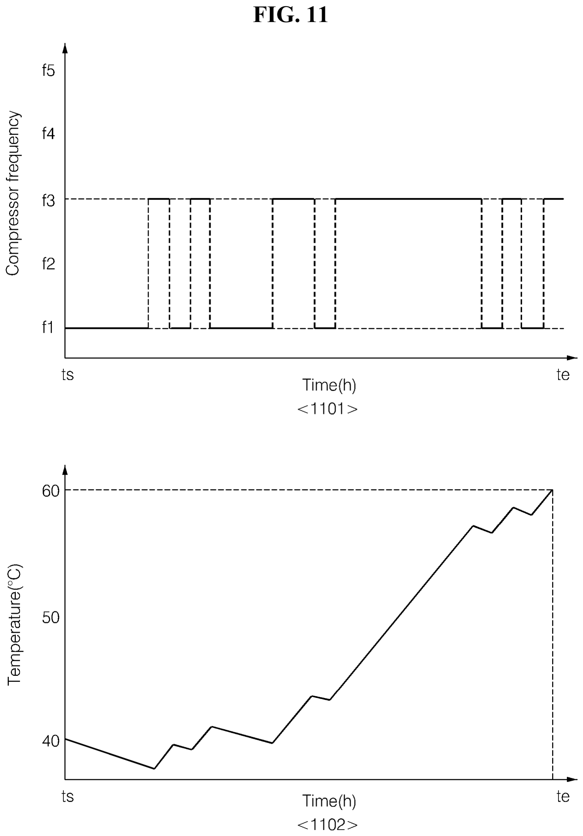

Referring to Fig. 11, when the hot water supply operation related setting is set to 'ECO', the heat pump 100 may perform the preliminary operation. For example, the heat pump 100 may control the operating frequency of the compressor 12 according to the schedule during the preliminary operation (1101). In this case, according to the preliminary operation performed according to the schedule, the temperature of the water stored in the hot water supply tank 58 may be raised to a hot water supply set temperature of 60°C at a timing te when the preliminary operation ends (1102).

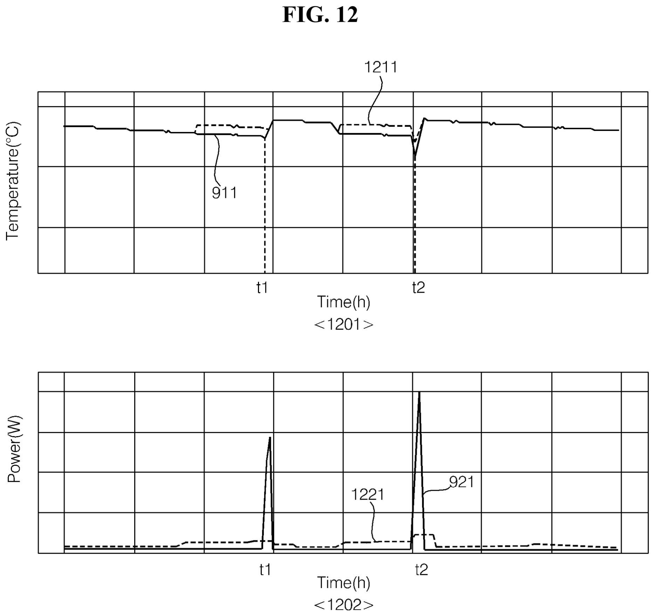

Referring to reference numeral 1201 in Fig. 12, at the timings t1 and t2 determined as the full-load interval, a temperature 1211 of the water stored in the hot water supply tank 58 when the hot water supply operation related setting is set to 'ECO' may be higher than the temperature 911 of the water stored in the hot water supply tank 58 when the hot water supply operation related setting is set to 'Comfort'. That is, when the hot water supply operation related setting is set to 'ECO', as the preliminary operation is performed prior to the timings t1 and t2 determined as the full-load interval, the temperature 1211 of the water stored in the hot water supply tank 58 may be raised before the timings t1 and t2.

Referring to reference numeral 1202 in Fig. 12, the power 921 used by the heat pump 100 when the hot water supply operation related setting is set to 'Comfort' may increase sharply at the timings t1 and t2 determined as the full-load interval. Meanwhile, the power 1221 used by the heat pump 100 when the hot water supply operation related setting is set to 'ECO' may be maintained at a certain level while the heat pump 100 performs the preliminary operation.

The total power consumption used in the heat pump 100 may be smaller when the hot water supply operation related setting is set to 'ECO' than when the hot water supply operation related setting is set to 'Comfort'. The rate corresponding to the total power consumption used in the heat pump 100 may also be smaller when the hot water supply operation related setting is set to 'ECO' than when the hot water supply operation related setting is set to 'Comfort'.

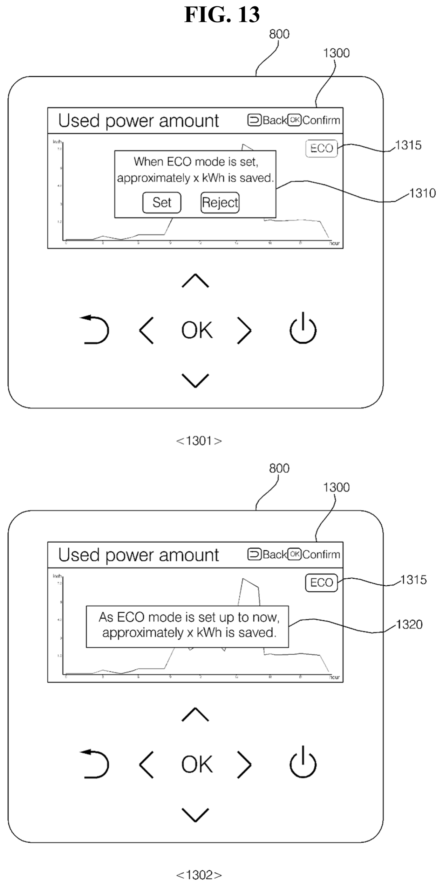

Referring to Fig. 13, the remote controller 800 may output a screen (hereinafter, referred to as a used power amount screen) 1300 displaying the power amount used in the heat pump 100. For example, the heat pump 100 and/or the server 500 may calculate the power amount used by the heat pump 100 for each time zone based on operation data corresponding to a predetermined period (e.g., 1 month). In this case, the remote controller 800 may output the used power amount screen 1300 displaying the power amount used in the heat pump 100 for each time zone, which is delivered from the heat pump 100.

Referring to reference numeral 1301, the remote controller 800 may output a message 1310 recommending the setting of the 'ECO' at the time of outputting the used power amount screen 1300 when the hot water supply operation related setting is set to 'Comfort'. The message 1310 recommending the setting of the 'ECO' may include a difference between the power amount used in the heat pump 100 when the hot water supply operation related setting is set to 'Comfort' and an estimated amount of power expected to be used by the heat pump 100 when the hot water supply operation related setting is set to 'ECO'.

Meanwhile, the used power amount screen 1300 may include an indicator 1315 indicating the hot water supply operation related setting. The indicator 1315 indicating the hot water supply operation related setting may correspond to 'ECO'. When the hot water supply operation related setting is set to 'Comfort', the indicator 1315 indicating the hot water supply operation related setting may be displayed in a first color.

Using a user interface provided through the remote controller 800, the user may change the hot water supply operation related setting from 'Comfort' to 'ECO' on the used power amount screen 1300. For example, when the remote controller 800 includes a touch screen, the user may change the hot water supply operation related setting from 'Comfort' to 'ECO' by selecting the indicator 1315 indicating the hot water supply operation related setting on the used power amount screen 1300, or by selecting a setting object included in the message 1310 recommending the 'ECO' setting. For example, the user may also maintain the hot water supply operation related setting as 'Comfort' by selecting a rejection object included in the message 1310 recommending the 'ECO' setting.

The remote controller 800 may transmit a user input for a hot water supply operation related setting to the heat pump 100. The heat pump 100 may change or maintain the hot water supply operation related setting based on the user input received from the remote controller 800.

Referring to reference numeral 1302, when the hot water supply operation related setting is changed from 'Comfort' to 'ECO', the remote controller 800 may output a message 1320 indicating the 'ECO' setting. The message 1320 recommending the setting of the 'ECO' may include a difference between the power amount used in the heat pump 100 when the hot water supply operation related setting is set to 'Comfort' and an estimated amount of power expected to be used by the heat pump 100 when the hot water supply operation related setting is set to 'ECO'.

Meanwhile, when the hot water supply operation related setting is changed from 'Comfort' to 'ECO', the indicator 1315 indicating the hot water supply operation setting included in the used power amount screen 1300 may be displayed in a second color. In the present disclosure, the color of the indicator 1315 indicating the hot water supply operation related setting is changed according to the hot water supply operation related setting is described as an example, but the disclosure is not limited thereto. For example, according to the change in the hot water supply operation related setting, a shape, a pattern, a text, etc., of the indicator 1315 indicating the hot water supply operation related setting may be changed.

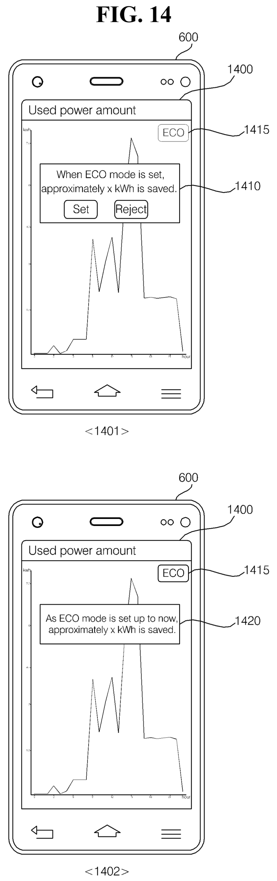

Referring to Fig. 14, a used power amount screen 1400 may also be output through the external device 600. For example, the heat pump 100 and/or the server 500 may calculate the power amount used by the heat pump 100 for each time zone based on operation data corresponding to a predetermined period (e.g., 1 month). In this case, the external device 600 may output the used power amount screen 1400 displaying the power amount used in the heat pump 100 for each time zone, which is delivered from the heat pump 100 and/or the server 500.

Referring to reference numerals 1401 and 1402, the external device 600 may output a message 1410 recommending the setting of the 'ECO' at the time of outputting the used power amount screen 1400 when the hot water supply operation related setting is set to 'Comfort'. The used power amount screen 1400 may include an indicator 1415 indicating the hot water supply operation related setting.

Using a user interface provided through the external device 600, the user may change the hot water supply operation related setting from 'Comfort' to 'ECO' on the used power amount screen 1400. Alternatively, using the user interface provided through the external device 600, the user may maintain the hot water supply operation related setting as 'Comfort' on the used power amount screen 1400.

The external device 600 may transmit the user input for the hot water supply operation related setting to the heat pump 100 and/or the server 500. The heat pump 100 may change or maintain the hot water supply operation related setting based on the user input received from the server 500 and/or the external device 600.

When the hot water supply operation related setting is changed from 'Comfort' to 'ECO', the external device 600 may output a message 1420 indicating the 'ECO' setting. When the hot water supply operation related setting is changed from 'Comfort' to 'ECO', the indicator 1415 indicating the hot water supply operation setting included in the used power amount screen 1400 may be displayed in the second color.

In the present disclosure, the screen, the user interface, etc., provided through any one of the external device 600 and the remote controller 800, may be provided through the other one of the external device 600 and the remote controller 800.

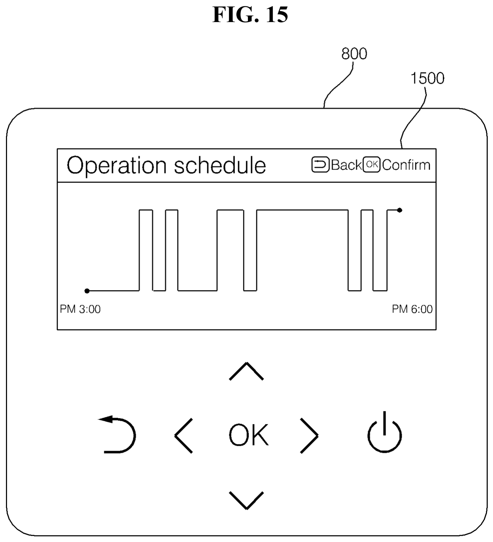

Referring to Fig. 15, the remote controller 800 may output a screen for a schedule for performing the preliminary operation (hereinafter, referred to as an operating schedule screen) 1500. For example, before the heat pump 100 performs the preliminary operation, while the heat pump 100 is performing the preliminary operation, or when the heat pump 100 terminates the preliminary operation, the remote controller 800 may provide the operation schedule screen 1500 to the user.

The operation schedule screen 1500 may include a timing at which the preliminary operation is initiated, a timing at which the preliminary operation is terminated, a schedule for controlling the operating frequency of the compressor 12 while performing the preliminary operation, etc.

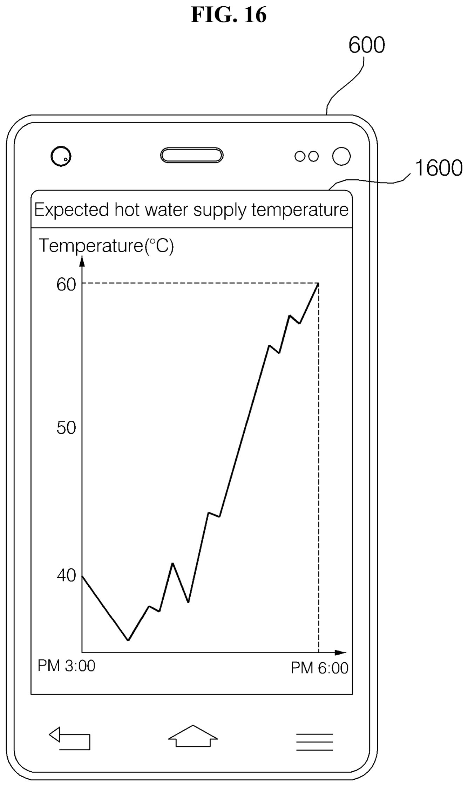

Referring to Fig. 16, the external device 600 may output a screen for the temperature of the water stored in the hot water supply tank 58 according to the preliminary operation (hereinafter, referred to as a hot water supply temperature screen) 1600.

The external device 600 may output the hot water supply temperature screen 1600 before the heat pump 100 performs the preliminary operation or while the heat pump 100 is performing the preliminary operation. For example, when the heat pump 100 and/or the server 500 controls the operating frequency of the compressor 12 according to the schedule for the preliminary operation, the heat pump 100 and/or the server 500 may calculate an expected pattern for the temperature of water stored in the hot water supply tank 58 using a preset learning model. In this case, the external device 600 may output the hot water supply temperature screen 1600 based on the expected pattern for the temperature of the water stored in the hot water supply tank 58 delivered from the heat pump 58 and/or the server 500.

The external device 600 may output the hot water supply temperature screen 1600 when the heat pump 100 terminates the preliminary operation. For example, the heat pump 100 and/or the server 500 may calculate an actual pattern for the temperature of the water stored in the hot water supply tank 58 based on operation data acquired while the heat pump 100 performs the preliminary operation. In this case, the external device 600 may output the hot water supply temperature screen 1600 based on the actual pattern for the temperature of the water stored in the hot water supply tank 58 delivered from the heat pump 58 and/or the server 500.

The hot water supply temperature screen 1600 may include a timing at which the preliminary operation starts, a timing at which the preliminary operation ends, a pattern for the temperature of the water stored in the hot water supply tank 58, etc.

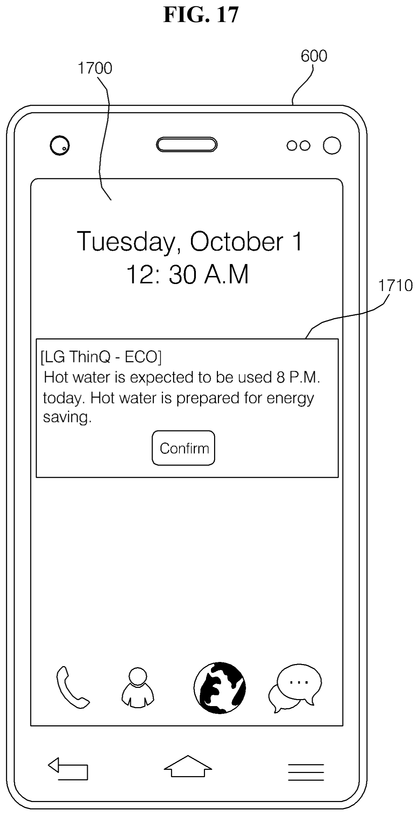

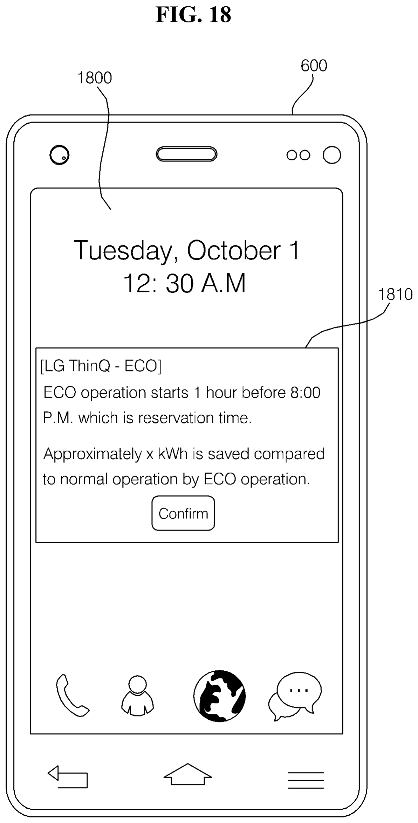

Referring to Figs. 17 and 18, the external device 600 may output messages (hereinafter, referred to as notification messages) 1710 and 1810 that provide a notifications regarding the performance of the preliminary operation. For example, the external device 600 may output the notification messages 1710 and 1810 based on the notification for the start of the preliminary operation received from the heat pump 100 and/or the server 500.

Referring to Fig. 17, the external device 600 may output a first notification message 1710 corresponding to the full-load interval determined based on the operating data of the heat pump 100. For example, the first notification message 1710 may include a timing of the full-load interval corresponding to hot water usage, information for the preliminary operation performed prior to the full-load interval, etc.

Referring to Fig. 18, the external device 600 may output a second notification message 1810 corresponding to the full-load interval determined based on data related to the user. For example, the second notification message 1810 may include a timing of the full-load interval corresponding to returning home of the user, information for the preliminary operation performed prior to the full-load interval, etc.

As described above, according to at least one embodiment of the present disclosure, it is possible to predict a full-load interval with a large power consumption.

Further, according to at least one embodiment of the present disclosure, it is possible to determine an operation schedule that minimizes a power consumption while satisfying a user demand corresponding to the full-load interval.

In addition, according to at least one embodiment of the present disclosure, it is possible to determine the operation schedule in consideration of a time-of-use (ToU) rate for power consumption.

Further, according to at least one embodiment of the present disclosure, it is possible to determine the operation schedule in consideration of a degree at which power is stored in an Energy Storage System (ESS) and/or a degree at which the stored power is used.

In addition, according to at least one embodiment of the present disclosure, it is possible to determine the operation schedule in consideration of user data forwarded from an external device.

Referring to Figs. 1 to 18, a heat pump 100 according to an aspect of the present disclosure may include: a compressor 12 which compresses a refrigerant; at least one heat exchanger 50 in which heat exchange occurs between water and the refrigerant; a memory 150 which stores operation data related to an operation of the heat pump 100; and a controller 180, and the controller 180 may calculate, based on the operation data, an estimated amount of power that the heat pump 100 is expected to use in a predetermined operation for bringing a temperature of water stored in a hot water supply tank 72, which stores the heat-exchanged water, to correspond to a preset target temperature, and determine a schedule for controlling a load of the heat pump 100 during an operating time in which the heat pump 100 performs the predetermined operation, based on the estimated amount of power.

Further, according to an aspect of the present disclosure, the controller 180 may predict a full-load interval in which the load of the heat pump 100 corresponds to a full load based on the operation data, and calculate the estimated amount of power expected to be used by the heat pump 100 in the predetermined operation performed before the full-load interval.

In addition, according to an aspect of the present disclosure, the controller 180 may predict the full-load interval using a learning model that predicts the full-load interval stored in the memory 150, and an input value of the learning model may at least include the temperature of the water stored in the hot water supply tank 58 among the operation data.

Further, according to an aspect of the present disclosure, the controller 180 may calculate the estimated amount of power by using a learning model that calculates the estimated amount of power stored in the memory 150, and the input value of the learning model may at least include an operating frequency of the compressor 12 among the operation data.

In addition, according to an aspect of the present disclosure, the schedule may include a sequence for the operating frequency of the compressor 12.

Further, according to an aspect of the present disclosure, the sequence may be constituted by operation frequencies of the compressor 12 set for each interval corresponding to a predetermined time included in the operating time.

In addition, according to an aspect of the present disclosure, the controller 180 may calculate the estimated amount of power for each interval corresponding to a predetermined time, and determine the schedule that minimizes a first objective function for a total amount of power used in the predetermined operation based on the estimated amount of power calculated for each interval.

Further, according to an aspect of the present disclosure, the controller 180 may calculate the estimated amount of power for each interval corresponding to a predetermined time, and determine the schedule that minimizes a second objective function for a rate corresponding to the total amount of power used in the predetermined operation based on the estimated amount of power calculated for each interval and a time-of-use (ToU) rate.

In addition, according to an aspect of the present disclosure, the controller 180 may calculate the estimated amount of power for each interval corresponding to a predetermined time, and determine the schedule that minimizes a third objective function for the rate corresponding to the total amount of power used in the predetermined operation based on a difference between the estimated amount of power calculated for each interval and a power amount suppliable by an energy storage system (ESS), and the time-of-use (ToU) rate.

Further, according to an aspect of the present disclosure, the heat pump 100 may further include a communication interface 130, and the controller 180 may determine, when receiving preset data related to a user through the communication interface 130, the full-load interval based on the received data.

A server 500 according to an aspect of the present disclosure may include: a communication interface 510 which communicates with a heat pump 100; a memory 530; and a processor 560 which stores operation data related to an operation of the heat pump 100 received through the communication interface 510 in the memory 530, and the processor 560 may calculate, based on the operation data, an estimated amount of power that the heat pump 100 is expected to use in a predetermined operation for bringing a temperature of water stored in a hot water supply tank 72, which stores water which exchanges heat with a refrigerant in the heat pump 100, to correspond to a preset target temperature, and determine a schedule for controlling a load of the heat pump 100 during an operating time in which the heat pump 100 performs the predetermined operation, based on the estimated amount of power.

Further, according to an aspect of the present disclosure, the processor 560 may predict a full-load interval in which the load of the heat pump 100 corresponds to a full load based on the operation data, and calculate the estimated amount of power expected to be used by the heat pump 100 in the predetermined operation performed before the full-load interval.

In addition, according to an aspect of the present disclosure, the processor 560 may predict the full-load interval using a learning model that predicts the full-load interval stored in the memory 530, and an input value of the learning model may at least include the temperature of the water stored in the hot water supply tank 58 among the operation data.

Further, according to an aspect of the present disclosure, the processor 560 may calculate the estimated amount of power by using a learning model that calculates the estimated amount of power stored in the memory 530, and the input value of the learning model may at least include an operating frequency of a compressor 12 of the heat pump 100 among the operation data.

In addition, according to an aspect of the present disclosure, the schedule may include a sequence for the operating frequency of the compressor 12 of the heat pump 100.

Further, according to an aspect of the present disclosure, the sequence may be constituted by operation frequencies of the compressor set for each interval corresponding to a predetermined time included in the operating time.

In addition, according to an aspect of the present disclosure, the processor 560 may calculate the estimated amount of power for each interval corresponding to a predetermined time, and determine the schedule that minimizes a first objective function for a total amount of power used in the predetermined operation based on the estimated amount of power calculated for each interval.

Further, according to an aspect of the present disclosure, the processor 560 may calculate the estimated amount of power for each interval corresponding to a predetermined time, and determine the schedule that minimizes a second objective function for a rate corresponding to the total amount of power used in the predetermined operation based on the estimated amount of power calculated for each interval and a time-of-use (ToU) rate.

In addition, according to an aspect of the present disclosure, the processor 560 may calculate the estimated amount of power for each interval corresponding to a predetermined time, and determine the schedule that minimizes a third objective function for the rate corresponding to the total amount of power used in the predetermined operation based on a difference between the estimated amount of power calculated for each interval and a power amount suppliable to the heat pump 100 by an energy storage system (ESS), and the time-of-use (ToU) rate.

An operation method of a heat pump according to an aspect of the present disclosure may include: an operation of calculating, based on operation data related to an operation of the heat pump 100 stored in a memory 150 of the heat pump 100, an estimated amount of power that the heat pump is expected to use in a predetermined operation for bringing a temperature of water stored in a hot water supply tank 72, which stores water which exchanges heat with a refrigerant compressed by a compressor 12 of the heat pump 100, to correspond to a preset target temperature; and an operation of determining a schedule for controlling a load of the heat pump 100 during an operating time in which the heat pump 100 performs the predetermined operation, based on the estimated amount of power.

Since the accompanying drawings are merely for easily understanding embodiments disclosed herein, it should be understood that the technical idea disclosed herein is not limited by the accompanying drawings, and all changes, equivalents or substitutions are included in the idea and technical scope of the present disclosure.

Meanwhile, an operation method of the present disclosure can also be embodied as processor readable code on a processor-readable recording medium. The processor-readable recording medium includes all kinds of recording apparatuses storing data that can be read by a processor. Examples of the processor-readable recording medium is ROM, RAM, CD-ROM, magnetic tapes, floppy disks, optical data storage apparatuses, and, including those that are implemented in the form of carrier waves such as data transmission through the Internet. In addition, the processor-readable recording medium is dispersed in computer systems connected through a network, so that the processor-readable code can be stored and executed in a distributed fashion.

While the present disclosure has been particularly shown and described with reference to exemplary embodiments thereof, it will be understood by those of ordinary skill in the art that various changes in form and detail may be made herein without departing from the idea and scope of the present disclosure as defined by the following claims and such modifications and variations should not be understood individually from the technical idea or aspect of the present disclosure.

**Claims**

1. A heat pump (100) comprising:

    a compressor (12) configured to compress a refrigerant;
    at least one heat exchanger (50) in which heat exchange occurs between water and the refrigerant;
    a memory (150) configured to store operation data related to an operation of the heat pump (100); and
    a controller (180) configured to:

        based on the operation data, calculate an estimated amount of power expected to be used by the heat pump (100) in a predetermined operation for bringing a temperature of water stored in a hot water supply tank (58) for storing the heat-exchanged water to correspond to a preset target temperature, and
        determine a schedule for controlling a load of the heat pump (100) during an operating time in which the heat pump (100) performs the predetermined operation, based on the estimated amount of power.

2. The heat pump (100) of claim 1, wherein the controller (180) is configured to:

    predict a full-load interval in which the load of the heat pump (100) corresponds to a full load based on the operation data, and
    calculate the estimated amount of power expected to be used by the heat pump (100) in the predetermined operation performed before the full-load interval.

**3.** The heat pump (100) of claim 2, wherein the controller (180) is configured to predict the full-load interval using a learning model for predicting the full-load interval stored in the memory (150), and
wherein an input value of the learning model at least includes the temperature of the water stored in the hot water supply tank (58) among the operation data.

**4.** The heat pump (100) of any one of claims 1 to 3, wherein the controller (180) is configured to calculate the estimated amount of power by using a learning model for calculating the estimated amount of power stored in the memory (150), and
wherein an input value of the learning model at least includes an operating frequency of the compressor (12) among the operation data.

**5.** The heat pump (100) of any one of claims 1 to 4, wherein the schedule includes a sequence for the operating frequency of the compressor (12).

**6.** The heat pump (100) of claim 5, wherein the sequence is constituted by operation frequencies of the compressor (12) set for each interval corresponding to a predetermined time included in the operating time.

**7.** The heat pump (100) of any one of claims 1 to 6, wherein the controller (180) is configured to:

calculate the estimated amount of power for each interval corresponding to a predetermined time, and
determine the schedule that minimizes an objective function for a total amount of power used in the predetermined operation based on the estimated amount of power calculated for each interval.

**8.** The heat pump (100) of any one of claims 1 to 7, wherein the controller (180) is configured to:

calculate the estimated amount of power for each interval corresponding to a predetermined time, and
determine the schedule that minimizes an objective function for a rate corresponding to the total amount of power used in the predetermined operation based on the estimated amount of power calculated for each interval and a time-of-use, ToU, rate.

**9.** The heat pump (100) of any one of claims 1 to 8, wherein the controller (180) is configured to:

calculate the estimated amount of power for each interval corresponding to a predetermined time, and
determine the schedule that minimizes an objective function for the rate corresponding to the total amount of power used in the predetermined operation based on a difference between the estimated amount of power calculated for each interval and an amount of power suppliable by an energy storage system, ESS, and the time-of-use, ToU, rate.

**10.** The heat pump (100) of claim 2 or any one of claims 3 to 9 when depending on claim 2, further comprising:

a communication interface (130),
wherein the controller (180) is configured to determine, when receiving preset data related to a user through the communication interface (130), the full-load interval based on the received data.

**11.** A server (500) comprising:

a communication interface (510) configured to communicate with a heat pump (100);
a memory (530); and
a processor (560) configured to store operation data related to an operation of the heat pump (100) received through the communication interface (510) in the memory (530),
wherein the processor (560) is configured to:

based on the operation data, calculate an estimated amount of power expected to be used by the heat pump (100) in a predetermined operation for bringing a temperature of water stored in a hot water supply tank (58) for storing water which exchanges heat with a refrigerant in the heat pump (100) to correspond to a preset target temperature, and
determine a schedule for controlling a load of the heat pump (100) during an operating time in which the heat pump (100) performs the predetermined operation, based on the estimated amount of power.

**12.** The server (500) of claim 11, wherein the processor (560) is configured to:

predict a full-load interval in which the load of the heat pump (100) corresponds to a full load based on the operation data, and

calculate the estimated amount of power expected to be used by the heat pump (100) in the predetermined operation performed before the full-load interval.

**13.** The server (500) of claim 11 or 12, wherein the processor (560) is configured to calculate the estimated amount of power by using a learning model for calculating the estimated amount of power stored in the memory (530), and wherein the input value of the learning model at least includes an operating frequency of a compressor (12) of the heat pump (100) among the operation data.

**14.** The server (500) of any one of claims 11 to 13, wherein the schedule includes a sequence for the operating frequency of the compressor (12) of the heat pump (100).

**15.** The server (500) of any one of claims 9 to 14, wherein the processor (560) is configured to:

calculate the estimated amount of power for each interval corresponding to a predetermined time, and

determine the schedule that minimizes at least one of objective functions,

wherein the objective functions include:

a first objective function for a total amount of power used in the predetermined operation based on the estimated amount of power calculated for each interval,

a second objective function for a rate corresponding to the total amount of power used in the predetermined operation based on the estimated amount of power calculated for each interval and a time-of-use, ToU, rate, and

a third an objective function for the rate corresponding to the total amount of power used in the predetermined operation based on a difference between the estimated amount of power calculated for each interval and an amount of power suppliable to the heat pump (100) by an energy storage system, ESS, and the time-of-use, ToU, rate.

EP 4 756 299 A1

# FIG. 1

23

**FIG. 2**

## FIG. 3

100

180

110 Fan drive unit

120 Compressor drive unit

130 Communication interface

Controller

140 Learning processor

170 Valve unit

160 Sensor unit

150 Memory

## FIG. 4

Input layer    Hidden layer    Output layer

**FIG. 5**

# FIG. 6

```
                    ┌──────────┐
                    │  Start   │
                    └────┬─────┘
                         │
                         ▼
         ┌───────────────────────────┐
         │   Acquire operation data  │───S610
         └─────────────┬─────────────┘
                       │
                       ▼                    S620
              ◇─────────────────◇
             ╱  Is operation     ╲    No
            ◇ data stored for     ◇─────────┐
             ╲ predetermined      ╱         │
              ╲ period or longer?╱          │
               ◇───────┬────────◇           │
                       │ Yes                │
                       ▼                    │
         ┌───────────────────────────┐      │
         │ Determine full-load       │──S630│
         │ interval                  │      │
         └─────────────┬─────────────┘      │
                       │                    │
                       ▼           S640     │
              ◇─────────────────◇           │
             ╱  Does full-load   ╲   No     │
            ◇  interval occur?    ◇─────────┤
             ╲                    ╱          │
              ◇───────┬─────────◇           │
                      │ Yes                 │
                      ▼                     │
         ┌───────────────────────────┐      │
         │ Calculate expected power  │──S650│
         │ amount                    │      │
         └─────────────┬─────────────┘      │
                       │                    │
                       ▼                    │
         ┌───────────────────────────┐      │
         │ Determine preliminary     │──S660│
         │ operation schedule        │      │
         └─────────────┬─────────────┘      │
                       │                    │
                       ▼                    │
         ┌───────────────────────────┐      │
         │ Perform heat pump         │──S670│
         │ operation                 │      │
         └─────────────┬─────────────┘      │
                       │◄───────────────────┘
                       ▼
                  ┌──────────┐
                  │   End    │
                  └──────────┘
```

# FIG. 7

<701>

<702>

# FIG. 8

800
810

Function  ⊟Back OK Confirm
Wi-Fi connection            〉 ──811
External boiler      〈 Off 〉 ──812
Water temperature setting   〉 ──813
Hot water supply mode 〈Comfort〉──814

∧
↺  〈 OK 〉  ⏻
∨

<801>

800
810

Function  ⊟Back OK Confirm
Wi-Fi connection            〉 ──811
External boiler      〈 Off 〉 ──812
Water temperature setting   〉 ──813
Hot water supply mode 〈ECO〉──814

∧
↺  〈 OK 〉  ⏻
∨

<802>

# FIG. 9

<901>

<902>

# FIG. 10

# FIG. 11

<1101>

<1102>

**FIG. 12**

<1201>

<1202>

# FIG. 13

<1301>

<1302>

# FIG. 14

<1401>

<1402>

**FIG. 15**

800

1500

| Operation schedule | ⊃Back OK Confirm |

PM 3:00

PM 6:00

**FIG. 16**

# FIG. 17

Tuesday, October 1
12: 30 A.M

[LG ThinQ - ECO]
Hot water is expected to be used 8 P.M.
today. Hot water is prepared for energy
saving.

Confirm

# FIG. 18

| | Europäisches Patentamt<br>European Patent Office<br>Office européen des brevets | **EUROPEAN SEARCH REPORT** | **Application Number**<br>EP 25 21 9631 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/086102 A1 (KOMATSU MASAYUKI [JP] ET AL) 21 March 2019 (2019-03-21)<br>* paragraphs [0023] - [0130]; figures 1-11 * | 1,2,7,8,10-12 | INV.<br>F24D19/10<br>F24D3/18<br>F24D17/02<br>F24F5/00 |
| X | DE 10 2018 116845 A1 (AIT DEUTSCHLAND GMBH [DE] ET AL.) 16 January 2020 (2020-01-16)<br>* paragraphs [0008] - [0082]; figure 1 * | 1-15 | F24H4/04<br>F24H9/20<br>F24H15/136<br>F24H15/152 |
| X | EP 4 151 924 A1 (DAIKIN IND LTD [JP]) 22 March 2023 (2023-03-22)<br>* paragraphs [0028] - [0101]; figures 1-8 * | 1-15 | F24H15/156<br>F24H15/164<br>F24H15/168<br>F24H15/223<br>F24H15/254 |
| A | FR 3 056 706 A1 (ELECTRICITE DE FRANCE [FR]) 30 March 2018 (2018-03-30)<br>* the whole document * | 1-15 | F24H15/258<br>F24H15/269<br>F24H15/335<br>F24H15/375 |

TECHNICAL FIELDS
SEARCHED      (IPC)

F24D
F25B
F24F
G05B
G06Q
F24H

The present search report has been drawn up for all claims

| Place of search | Date of completion of the search | Examiner |
|---|---|---|
| Munich | 12 March 2026 | Schwaiger, Bernd |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 25 21 9631

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | | | F24H15/38<br>F24H15/39<br>F24H15/395<br>F24H15/429<br>F24H15/486<br>G05B17/02<br>G06Q50/06 |
| | | | **TECHNICAL FIELDS SEARCHED (IPC)** |

The present search report has been drawn up for all claims

| Place of search | Date of completion of the search | Examiner |
|---|---|---|
| Munich | 12 March 2026 | Schwaiger, Bernd |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.............................................................................

& : member of the same patent family, corresponding
document

EPO FORM 1503 03.82 (P04C01)

page 2 of 2

40

## ANNEX TO THE EUROPEAN SEARCH REPORT
## ON EUROPEAN PATENT APPLICATION NO.

EP 25 21 9631

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-2026

| Patent document cited in search report | | Publication date | Patent family member(s) | | Publication date |
|---|---|---|---|---|---|
| US 2019086102 | A1 | 21-03-2019 | CN | 108291738 A | 17-07-2018 |
| | | | EP | 3382297 A1 | 03-10-2018 |
| | | | JP | 6584524 B2 | 02-10-2019 |
| | | | JP | WO2017090168 A1 | 29-03-2018 |
| | | | US | 2019086102 A1 | 21-03-2019 |
| | | | WO | 2017090168 A1 | 01-06-2017 |
| DE 102018116845 | A1 | 16-01-2020 | NONE | | |
| EP 4151924 | A1 | 22-03-2023 | EP | 4151924 A1 | 22-03-2023 |
| | | | JP | 7108220 B2 | 28-07-2022 |
| | | | JP | 2021191991 A | 16-12-2021 |
| | | | WO | 2021246406 A1 | 09-12-2021 |
| FR 3056706 | A1 | 30-03-2018 | FR | 3056706 A1 | 30-03-2018 |
| | | | WO | 2018060157 A1 | 05-04-2018 |

EPO FORM P0459

For more details about this annex : see Official Journal of the European Patent Office, No. 12/82

**REFERENCES CITED IN THE DESCRIPTION**

**Patent documents cited in the description**

- KR 1020240177862